(19) Europäisches Patentamt
European Patent Office
Office européen des brevets

(11) EP 4 222 989 B1

(12) **EUROPEAN PATENT SPECIFICATION**

(45) Date of publication and mention of the grant of the patent:
**12.11.2025 Bulletin 2025/46**

(21) Application number: **21806317.0**

(22) Date of filing: **01.10.2021**

(51) International Patent Classification (IPC):
***H04W 4/38*** *(2018.01)*

(52) Cooperative Patent Classification (CPC):
**H04W 4/38**

(86) International application number:
**PCT/GB2021/052541**

(87) International publication number:
**WO 2022/069899 (07.04.2022 Gazette 2022/14)**

# (54) A SENSING SYSTEM

ERFASSUNGSSYSTEM

SYSTÈME DE DÉTECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2020 US 202063086642 P**

(43) Date of publication of application:
**09.08.2023 Bulletin 2023/32**

(73) Proprietor: **5G3I Ltd**
**London**
**WC2H 9JQ (GB)**

(72) Inventor: **DOSLUOGLU, Taner**
**Glasgow Strathclyde G41 4LH (GB)**

(74) Representative: **Scintilla Intellectual Property Ltd**
**Suite 2.1**
**145 St. Vincent Street**
**Glasgow G2 5JF (GB)**

(56) References cited:
**US-A1- 2020 293 790** **US-B2- 10 476 996**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Technical Field

The present disclosure relates to systems and methods for sensing systems, and in particular to gateways and sensors for use in wireless sensor network systems wherein the gateways are capable of configuring each sensor individually to achieve large-scale optimization.

### Background

In recent years wireless sensor networks (WSN) comprising artificial neural networks have gained wide attention in a number of fields, such as military surveillance, industrial process control, environmental and healthcare monitoring, fault detection and human activities recognition (HAR), to name just a few.

Wireless sensor networks typically comprise a large number of sensors and a gateway or router in communication with each of the sensors. Sensors employed in WSN are typically low-cost, low-power and multifunctional sensors provided with data processing and communicating capabilities. Wireless sensor networks often comprise a central or distributed neural network. For example, artificial neural networks are used within wireless sensors networks in order to achieve better data aggregation functionalities.

WSNs are characterized by the ability to dynamically self-organize and self-configure after deployment. This allows to deploy sensors without careful pre-planning or engineering as well as to dynamically re-configure the network to respond to a change in the environment or the network itself. This capability is key to most WSN applications, since the sensors may have to be deployed in hostile or remote locations where it is hard or impossible to replace faulty sensors as well as to recharge or replace the sensors' batteries. Moreover, the sensors are generally deployed in environments with mutating conditions which can cause the sensors' relative positions to vary over time and require frequent re-configuration.

WSNs are characterized by severe power, computation and memory constraints which need to be addressed at the system architecture level. In order to address these requirements, an incredible amount of research is being undertaken to integrate innovative solutions with wireless sensors networks, such as the implementation of deep autoencoder/decoder connectivity architectures, spectrum sharing and network slicing similar to those employed in 5G communication technologies, self-organizing and self-healing Internet-of-Things (IoT) mesh networks, powerful development and deployment platforms running on cloud servers.

It would be desirable to provide an intelligent wireless sensor network with connectivity capabilities that allow to take advantage of all these innovations. However, most current WSNs lack the ability of integrating all these innovations in the most advantageous way. This requires a high level of large-scale optimization after deployment which most state-of-art wireless sensor networks still lack. The effort required to train neural networks employed in wireless sensor network becomes larger as the number of sensors in the network, and therefore the size of the neural network, increases. At the scale of modern WSNs, training the neural network centrally can be a daunting task. Edge computing allows to optimize the data locally but with no awareness of the overall system model. A new paradigm is needed where the system-level optimization defines the constraints of the edge computing as well as a local sub-model that addresses these constraints based on the local sensor data. This would enable modular integration that can be scaled even to the point of having massive redundancy in the system.

In many applications, WNSs are integrated within a computing network, such as a client-server, peer-to-peer or other type of network, with the gateway acting as an intermediary between the sensors and the computing network, and transmitting the sensors data to the computing network. In system with a large number of sensors, the amount of data transmitted from the sensor to the gateway and to the computing network is often very cumbersome and a considerable amount of time and power may be required for the transmission and post-processing of the data. This is undesirable, especially in settings where achieving real-time information may be very critical, such as to detect a fatal fault in an industrial process or a dangerous environmental event. A solution may be to perform part of the processing at the edge-level, i.e. at the sensors. For example, WSNs implementing digital signal processing and/or distributed artificial intelligence offer many benefits in terms of power and bandwidth savings. However, current systems fail to address the fundamental question of whether the edge processing of data is redundant or, worse, may hinder central processing of data in the cloud servers.

Most state-of-the-art WSNs are optimized for single use cases and it is difficult to achieve scalability and large-scale optimization for reuse in different applications. It would be desirable to provide a new class of intelligent wireless sensor networks which allow for large-scale optimization in a wide variety of different applications and environmental conditions and for use within different systems. Large-scale optimization may comprise for example improved fault tolerance, increased security and a significant reduction in the network traffic. Moreover, it would be desirable to provide a method of connection between sensors and the gateway that can easily be scaled, is robust, fault-tolerant and able to handle redundancies as well as inconsistencies seamlessly.

US2020/293790A1 describes a system for detecting occupancy of a workplace.

## Summary

There is a need for enhanced optimization of sensing systems, and it is an object of the invention to address various limitations including one or more of the limitations discussed above.

The invention is set out in the appended set of claims.

According to a first aspect of the invention there is provided a sensing system comprising: a plurality of sensors; a gateway device configured to exchange data with the sensors; and a distributed decision engine comprising one or more sensor portions provided at one or more of the sensors and a gateway portion provided at the gateway device; wherein each of the sensors is configurable to operate in a plurality of different transmission modes, wherein the sensor transmits primary sensor data and/or outputs of the sensor portion of the decision engine provided at said sensor; and the gateway is arranged to selectively control the operation of the sensors and to configure the sensor transmission mode; wherein the gateway device is configured to apply an intentional time delay to data received from the sensors wherein the intentional time delay is automatically determined based on which combination of delays provides maximum correlation with a desired outcome; or wherein the gateway device is configured to add an intentional time delay to a time-stamp associated with the data received from the sensors, wherein the intentional time delay is correlated to the distance of each sensor from a source location of a significant event.

Optionally, the decision engine comprises a distributed neural network with a plurality of layers and each of the one or more sensor portions of the decision engine comprises one or more of said layers.

Optionally, the outputs of the one or more sensor portions of the decision engine comprise results of an inferencing outcome completed locally at the sensors, and/or autoencoded neural network outputs.

Optionally, the gateway device is configured to selectively control the plurality of sensors to switch between a first operation mode and a second operation mode, wherein: in the first operation mode, a first subset of the sensors are selected and configured to transmit outputs of the sensor portion of the decision engine and the decision engine is configured to determine if a significant event has occurred; the second operation mode is initiated if it is determined that the significant event has occurred; and in the second operation mode, a second subset of the sensors are selected and configured to transmit data useful for determining further information related to the significant event.

Optionally, the first subset comprises sensors which operate in a low power configuration and the second subset comprises sensors which operate in a higher power configuration compared to the first subset and which can provide more extensive data.

Optionally, the first subset of sensors comprises an array of sound or vibration sensors configured to provide directional sensitivity; the second subset of sensors comprises sensors configured to capture images or 3D lidar scans; and the second subset of sensors is directed at the source location of the significant event as determined by the first set subset of sensors.

Optionally, the gateway device receives a plurality of inputs from different sensors and the gateway portion of the decision engine applies a cumulative thresholding to determine if the significant event has occurred.

Optionally, the sensors are selectively polled based on input from the decision engine to choose sensors that are most likely to provide a required information related to the significant event with highest confidence.

Optionally, sensors are ignored or deselected if they contribute duplicate data or data that is deemed by the decision engine to be unreliable.

Optionally, the gateway device can configure one or more dedicated sensors to detect the end of the significant event.

Optionally, each sensor has an internal time counter and all data are transmitted from the sensors to the gateway with a time-stamp.

Optionally, the gateway device synchronizes the time-stamps by keeping track of the relative delay of the internal time counter of each sensor with respect to a synchronization signal and all data received by the gateway are time-aligned according to their synchronized time-stamps.

Optionally, the gateway device is further configured to determine a spatial distribution of one or more sensors.

Optionally, determining the relative spatial distribution of one or more sensor comprises: providing a signal source at one or more test locations; measuring a time delay with which each sensor detects a signal emitted by said signal source; and deriving the distance between each sensor and the one or more test locations from said time delay.

Optionally, the gateway is further configured to estimate the source location of a significant event.

Optionally, estimating the source location of a significant event comprises: determining the relative spatial distribution of one or more sensors; measuring a time delay with which each of said sensors detects the significant event; and extrapolating the estimated source location of the significant event from the time delay correlation of the sensors and their relative spatial distribution.

Optionally, the gateway comprises a synchronization module to synchronize the data received at the gateway by the sensors based on the associated time stamps; wherein the gateway is further configured to implement directional selective detection relative to the source location of the significant event by adding an intentional time delay to each synchronized time-stamp.

Optionally, the distributed neural network is configured to determine the optimal configuration of each sensors for achieving a desired outcome without any explicit knowledge of the sensors' spatial distribution and/or time delay correlation; wherein, for each input to the gateway portion of the decision engine, the distributed neural network is further configured to automatically apply an intentional time delay to said input.

Optionally, different types of sensors are provided; and a source location determined by one type of sensor is used to adjust a directionality of a second type of sensor.

Optionally, the system comprises a server which is configured to exchange data and instructions with the gateway.

Optionally, the system is configured such that the sensors detect all likely events of interest and transmit all event detection data to the gateway with a timestamp; and the gateway is arranged to: aggregate the event detection data from the sensors based on their timestamps, determine which events among the likely events of interest are significant events, select a subset of the aggregated data which is related to the significant events; and transmit to the server for further analysis only the selected subset of data.

Optionally, the server communicates to the gateway a target data bandwidth; and the subset of data is selected by the gateway such that the amount of data sent to the server from the gateway is maintained to be approximately target data bandwidth.

Optionally, the gateway determines which data are related to significant events based on a threshold of significance probability; and the gateway adjusts the threshold of significance probability based on the target data bandwidth communicated by the server.

Optionally, the server calculates a significance value after conducting further analysis on the subset of data transmitted by the gateway and the gateway portion of the distributed decision engine is updated based on the significance value.

Optionally, the server is further configured to analyze data received from the gateway and maximize the probability for detection of a significant event by configuring the gateway to add an intentional time delay to each synchronized time-stamp data coming from the sensors.

Optionally, the server is further configured to analyze consecutive transmissions of data related to a significant event from the gateway and to determine a change in the spatial distribution of the sensors and/or in the source location of the significant event.

Optionally, the system comprises one or more further analogous gateways, each configured to communicate with the server and with the plurality of sensors; the distributed decision engine comprises one or more further gateway portions each further portion being implemented at the one or more further gateways; at each time, the server determines which gateways are allowed to transmit data to the server; and, for each gateway which is allowed to transmit data, the significance probability value, the gateway portion of the distributed decision engine, and/or the target data bandwidth are adjusted such that the distributed decision engine provides improved accuracy and probability of detection of significant events with minimum data bandwidth and energy usage.

Optionally, the gateway device is located on a train and one or more of the sensors are located on a railway car of the train.

Optionally, the one or more sensors located on the railway car are configured to detect acoustic waves; and the system is configured to correlate the acoustic waves detected by the said one or more sensors to a speed of the train in order to generate a map of an environment surrounding the train.

Optionally, said one or more sensors located on the railway car are configured to detect noise signals; and the system comprises: one or more active noise cancellation modules and one or more actuator devices, the one or more active noise cancellation modules being configured to receive in input the noise signals detected by the sensors; and control the one or more actuator devices in order to generate noise cancelling signals for the purpose of achieving localized noise cancellation at one or more locations inside the railway car.

Optionally, the noise signals are acoustic noise signals; the one or more sensors located on the railway car comprise acoustic sensors configured to detect said acoustic noise signals; and the actuator devices are speaker devices.

Optionally, the speaker devices comprise one or more actuators configured to drive one or more window panes of the railway car to generate vibrations such that the window panes themselves function as flat panel speakers.

Optionally, the noise signals comprise motion vibration signals; the one or more sensors located on the railway car comprise motion vibration sensors configured to detect said motion vibration signals; and the actuator devices are active suspension actuator devices.

Optionally, the system comprises a surface coating with acoustic holographic properties, the surface coating being provided inside the railway car and/or at one or more window panes of the railway car; and the active noise cancellation modules are configured to modify the holographic acoustic wave reflection properties of the surface coating and generate noise cancelling signals in order to achieve active noise cancellation at multiple locations inside the railway car such as different passenger seat locations.

Optionally, the one or more sensors located on the railway car are deployed at or within a window pane of the railway car.

According to a second aspect of the invention there is provided a sensing method comprising: providing a plurality of sensors, a gateway device configured to exchange data with the sensors, and a distributed decision engine comprising one or more sensor portions provided at one or more of the sensors and a gateway portion provided at the gateway device; wherein each of the sensors is configurable to operate in a plurality of different transmission modes wherein the sensor transmits primary sensor data and/or outputs of the sensor portion of the decision engine; said sensing method comprising said gateway device selectively controlling the operation of the sensors and configuring the sensor transmission mode; wherein the gateway device is configured to apply an intentional time delay to data received from the sensors wherein the intentional time delay is automatically determined based on which combination of delays provides maximum correlation with a desired outcome; or wherein the gateway device is configured to add an intentional time delay to a time-stamp associated with the data received from the sensors wherein the intentional time delay is correlated to the distance of each sensor from a source location of a significant event.

The method of the second aspect may also incorporate using or providing features of the first aspect and various other steps as disclosed herein.

According to an aspect of the disclosure there is provided a noise cancelling apparatus for use on a railway car of a train, wherein the noise cancelling apparatus comprises a surface coating with acoustic holographic properties and a sensing system, the sensing system comprising: a plurality of sensors located on the railway car, a gateway device located on the train and configured to exchange data with the sensors, and one or more active noise cancelling modules; wherein the plurality of sensors is configured to detect one or more noise signals; and the active noise cancelling modules are configured to: receive in input the detected noise signals; and, based on said noise signals, control the one or more actuator devices in order to generate noise cancelling signals and make use of the holographic acoustic reflection properties of the surface coating in order to achieve active noise cancellation at multiple locations inside the railway car.

Optionally, the sensing system further comprises a distributed decision engine comprising one or more sensor portions provided at one or more of the sensors and a gateway portion provided at the gateway device; wherein each of the sensors is configurable to operate in a plurality of different transmission modes, wherein the sensor transmits primary sensor data and/or outputs of the sensor portion of the decision engine provided at said sensor; and the gateway is arranged to selectively control the operation of the sensors and to configure the sensor transmission mode.

Optionally, the sensors are provided at or within the window pane.

Optionally, the noise signals are one of motion vibration signals or acoustic signals and the sensors comprise one or more of acoustic sensors and vibration sensors.

Optionally, the surface coating with acoustic holographic properties is provided on one or more window panes of the railway car.

The noise cancelling apparatus may also incorporate using or providing features and steps of the first and the second aspect and various other features and steps as disclosed herein.

According to another aspect of the disclosure there is provided a noise cancelling method for cancelling noise inside a railway car of a train, the method comprising: providing a surface coating with acoustic holographic properties; providing a sensing system comprising a plurality of sensors located on the railway car, a gateway device located on the train and configured to exchange data with the sensors, and one or more active noise cancelling modules; said methods comprising said sensor detecting one or more noise signals; and said active noise cancelling modules receiving in input the one or more noise signals; and, based on said noise signals, modifying the holographic properties of the surface coating and one or more actuator devices generating noise cancelling signals in order to achieve active noise cancellation at multiple locations inside the railway car.

The noise cancelling method may also incorporate using or providing features and steps as disclosed herein with respect to the first and second aspect of the invention and the noise cancelling apparatus of the disclosure.

## Brief Description of the Drawings

The disclosure is described in further detail below by way of example and with reference to the accompanying drawings, in which:

Figure 1 is a schematic diagram of a sensing system according to a first aspect of the present disclosure wherein the system comprises a gateway;
Figure 2 is a schematic diagram of a sensing system according to some embodiments of the present disclosure;
Figure 3 is a schematic diagram of a sensing system according to further embodiments of the present disclosure wherein the gateway comprises a synchronization module and a decoder module;

Figure 4 is a flow chart illustrating an example method for initializing time stamping in the system of Figure 3;
Figure 5 is a schematic diagram illustrating a first part of an example method for determining the relative spatial distribution of a sub-group of sensors in the system of Figure 3;
Figure 6 is a schematic diagram illustrating a second part of the method of Figure 5;
Figure 7 is a schematic diagram illustrating how the gateway of Figure 3 may estimate the source location of a significant event;
Figure 8 is a schematic diagram illustrating an example scenario in which the gateway of Figure 3 re-configures some of the sensors based on a time delay information of each sensor;
Figure 9 is a flow chart illustrating a method 900 for implementing beamforming in the system of Figure 3;
Figure 10 is a schematic diagram illustrating an example application of some embodiments of the present disclosure;
Figure 11 is a flow chart illustrating a sensing method according to a second aspect of the present disclosure;
Figure 12 shows an embodiment wherein sensors located on a railway car are configured to detect acoustic waves;
Figure 13 illustrates an internal side view of the embodiment of figure 12; and
Figure 14 illustrates the modification of holographic acoustic wave reflection properties in order to achieve active noise cancellation at multiple locations inside the railway car of the embodiment in figures 12 and 13.

**Description**

Figure 1 is a schematic diagram of a sensing system 100 according to a first aspect of the present disclosure.

The sensing system 100 comprises a plurality of sensors $110_i$ (where i is an integer index), a gateway device 120 and a distributed decision engine (DDE) 130. The gateway device 120, hereinafter referred to also as gateway or router, is configured to exchange data with the sensors $110_i$. The gateway 120 may be for example a radio-frequency gateway. The distributed decision engine 130 comprises one or more sensor portions $132_i$ provided at one or more of the sensors $110_i$ and a gateway portion 134 provided at the gateway device 120. Each of the sensors $110_i$ is configurable to operate in a plurality of different transmission modes wherein the sensor $110_i$ transmits primary sensor data and/or outputs of the sensor portion $132_i$ of the decision engine 130 provided at the sensor $110_i$ and the gateway 120 is arranged to selectively control the operation of the sensor $110_i$ and to configure the sensor transmission mode.

Primary sensor data refers herein to "observed" data, i.e. data collected by the sensors $110_i$ and which has not yet been interpreted or analyzed to extrapolate intelligent information. For example, primary sensor data may comprise raw sensor signals that have not undergone any kind of processing, although generally primary sensor data will at the very least be filtered and/or sampled signals. Primary sensor data may comprise sensor time-domain signals or frequency domain signals. Primary sensor data may further comprise signal attributes, such as frequency components, wavelet transform components, min/max values, derivative, integral, etc. The sensors $110_i$ may comprise a digital signal processing (DSP) block for carrying out some pre-processing and the primary sensor data may be the data provided by said DSP block. Hereinafter primary sensor data may sometimes also be referred to as "raw" sensor data.

The gateway device 120 may be configured to communicate and exchange data with the sensors $110_i$ via a wireless communication network, thereby providing a so-called wireless sensor network. For example the system 100 may be configured to work as a mesh network, in which the sensor $110_i$ connect directly, dynamically and non-hierarchically to as many other sensors as possible and cooperate with one another to efficiently route data from/to the gateway device 120. Alternatively, or in parallel, the sensing system 100 may also be configured such that the gateway device 120 connects directly to all sensors $110_i$ without having to rely on mesh network connectivity. It will be understood that the embodiments of the present disclosure are not limited to any specific network connectivity topology and that some embodiments may be configured so that they can work with either topology.

The distributed decision engine 130 may comprise one or more of a distributed artificial intelligence module, a statistical inference module or other type of module capable of providing an inference outcome. In particular, the distributed decision engine 130 may comprise a distributed neural network with a plurality of layers, the sensor portion of the decision engine comprising one or more of said layers. However, it will be appreciated that any type of distributed artificial intelligence may be implemented in the distributed decision engine 130. For example, an analog neuromorphic artificial intelligence without hidden layers may be used instead of a deep neural network.

The plurality of sensors 110 may comprise many identical sensors $110_i$ and the gateway 120 may instruct each of the identical sensors to operate in a different transmission mode based on the sensor providing inaccurate data, or providing redundant data, or providing data at inadequate speed and so on. For example, if it the gateway 120 detects that a sensor is in an optimal location for gathering data about a specific event, then the sensor may be re-repurposed to observe said event and transmit sensor primary data or inferencing outcomes related to the event as needed.

The gateway 120 may determine the best optimal combination of selected transmission modes for all the sensors $110_i$ based on historical observations, server instructions and/or system modelling. The gateway 120 may use artificial intelligence in order to determine which combination of operation modes the sensors $110_i$ should be operating in. For example, the decision engine 130 or the gateway 120 may comprise a deep learning neural network which is specifically trained to predict the optimal combination of operation modes for the sensors $110_i$.

The transmission modes of the sensors affect the bandwidth and speed of transmission of the sensor data to the gateway 120, as well as other system parameters, and therefore affect the overall performance of the sensing system 100. For example, if the plurality of sensor 110 comprised multiple identical sensors deployed at different locations and each sensor $110_i$ were configured to transmit all the raw data to the gateway 120, there would likely be a huge amount of data, most of which redundant, being received in input by the gateway 120 for fusion and analysis. There are scenarios in which such redundancy is required to achieve better accuracy and therefore it is desirable for all sensors to provide all data collected; and, there are scenarios where it is desirable to optimize transmission speed and computation/storage cost instead of accuracy, or where the same accuracy can be achieved with less redundancy. The optimal system configuration depends on the specific application and on real-time conditions. By configuring each sensor individually to process some of the data partially or fully within the sensor portion of the decision engine and to operate in a specific transmission mode, the transmission speed, power and bandwidth as well as the computational and storage costs at the gateway can be fully optimized.

Figure 2 is a schematic diagram of a sensing system 200 according to some embodiments of the present disclosure. The sensing system 200 comprises a gateway device 220, a plurality of sensors $210_i$ and a distributed decision engine 230 which are analogous to the gateway device 120, plurality of sensors $110_i$ and distribute decision engine 130 of Figure 1.

The distributed decision engine 230 comprises a sensor portion 232 at one or more sensors $210_i$ and a gateway portion 234 provided at the gateway device 220. In particular, in the present embodiments, the decision engine 230 comprises a distributed neural network with a plurality of layers (236, $238_i$). The sensor portions $232_i$ of the decision engine comprise some or more of said layers, hereinafter also referred to as distributed layers ($238_i$), and the gateway portion 234 comprises the remaining layers, hereinafter also referred to as central layers (236).

In the present embodiments, the output of the sensor portions $232_i$ comprises results of an inferencing outcome completed locally at the sensors $210_i$ and/or autoencoded neural network outputs. Inferencing outcome refers to data which have been generated by interpreting and/or analyzing sensor data to extract intelligent information. Inferencing is used herein with a generic connotation and may cover different computational tasks such as extrapolating or predicting a required information from observed data. The inferencing outcome may be for example information related to an event or parameter detection, prediction, classification or estimation. The inferencing outcome may be provided by the neural network layers $238_i$ or by another type of inferencing module implemented within the sensor portions 232 of the distributed decision engine 130, such as a statistical inferencing module.

The output of the sensor portions $232_i$ of the decision engine are provided in input to the gateway portion 234 of the decision engine for further processing. The sensors $210_i$ may be configured to auto-encode all data, whether primary sensor data or inferencing outcome, prior to transmitting the data to the gateway 220. Autoencoded data refers wherein to data which are encoded by the neural network layers $238_i$ for compression and/or encryption. For example, the neural network layers $238_i$ may be trained to ignore a specific signal noise or to extract specific features for dimensionality reduction prior to the data being fed to the gateway neural network layers 236. The neural network layers $238_i$ may be configured to perform various types of auto-encoding depending on the task that the decision engine 230 is required to complete.

The gateway 220 can configure the distributed layers $238_i$ at each sensor $210_i$ to take into account sensor to sensor variations by including each sensor's calibration data during the training of the distributed layers within the sensors. For example, the plurality of sensors 210 may include linguistic, visual, aural, gestural, spatial, and accelerator sensors, among others. Digital signal processing unit with prediction and correction functionalities such as Extended Kalman Filtering (EKF) may be incorporated in the training of the distributed layers 232 where the configuration of the sensors are initially done based on multiple simulations of the system 200 wherein in each simulation increasing noise and random error are added to the input of the EKF. The sensors may further comprise a digital signal processing unit and state machine module which are used to determine the most likely state of the system in addition to the distributed deep neural network inferencing.

The gateway 220 may be coupled to a server 250 to which the data are uploaded for further analysis and/or storage and be configured to communicate with the server 250 for sending and receiving data and instructions. The server 250 may be configured to provide a hierarchical list of tasks to be performed by the sensing system 200 and the gateway 220 may configure the sensors $210_i$ based on which combination of operation modes will allow to optimize the completion of the highest-priority task in the hierarchical list of tasks. By constantly adapting the operation mode of the sensors to real-time conditions and/or server instructions, the gateway 220 ensures that the plurality of sensors 210 is always in the best possible configuration to complete the tasks required or to collect the data needed according to the instructions provided by the server 250, whilst providing optimal power consumption, bandwidth, accuracy, speed, and so on. For example, the gateway 220 may modify the operation mode of the sensors $110_i$ once it has collected enough data for a specific parameter and missing data for a different parameter are needed according to the server's instruction. The list may be constantly updated based on which tasks are completed and/or instructions from the server 250.

It will be appreciated that any type of server may be coupled to the gateway 220, for example the server 250 may be provided as a local or remote computer or it may be a cloud-based server. It will also be appreciated that the gateway 220 and the server 250 may be implemented on the same hardware device; or, they may be provided by separate hardware devices. It will further be appreciated that in different embodiments the sensing systems according to the present disclosure may be configured to be coupled to or integrated with a serverless computing network, such as a peer-to-peer network, wherein each of the nodes of the computing network may carry out server functionalities and send instructions to and receive data from the gateway device.

At each point in time, the gateway 220 configures the sensors $210_i$ to operate in the transmission mode which is most optimal for the real-time environmental conditions and sensors configuration, as previously described with reference to Figure 1. The gateway may for example vary the transmission mode of a give sensor based on a temporary fault, a specific event detection, a change in the sensors spatial distribution, historical data, and so on.

The operation mode of each sensor $210_i$ determines what type of data each sensor transmits to the gateway 220. In particular, the gateway 220 can configure one or more of the sensors $210_i$ to perform inference and only transmit to the gateway the inferencing outcome such that a lot of the computational burden of the gateway and/or central server is transferred to the sensors $210_i$. The inferencing outcome may be provided by the distributed layers of $238_i$ or by another module implemented within the sensor portion of the decision engine as previously explained. One or more other sensors $210_i$ may be configured to transmit sensors primary data only.

Both the inferencing outcome and the sensor primary data prior to be transmitted may be autoencoded for encryption or compression by the distributed neural network layers $238_i$. The autoencoded data may then be provided in input to the central layers 236 of the distributed neural network. This further reduces the amount of data that needs to be transmitted to the gateway 220 and/or processed centrally by the gateway or server.

In the example scenario of Figure 2 the sensors $210_1$, $210_2$, $210_3$ are configured by the gateway 220 to transmit autoencoded sensor primary data, that is, to perform feature extraction at the sensor level using the embedded neural network layers $238_i$ and to transmit the autoencoded data to the gateway 220. The sensor $210_4$ is configured by the gateway 220 to transmit raw data to the gateway 220. The sensors $210_5$ is configured to transmit inferencing data to the gateway 220.

The sensors may also be configured to operate in a transmission mode which is a combination of the modes explained above, i.e. in which the sensor transmits a combination of the sensor primary data, inferencing data, autoencoded sensor primary data, autoencoded inferencing data or all of them simultaneously.

The gateway 220 may further be configured to control the timing of the transmission of data from the sensors $210_i$ to the gateway. In particular, the gateway 220 may configure the plurality of sensors 210 to transmit in a time-continuous transmission mode wherein all sensors $210_i$ are allowed to transmit data to the gateway as soon as the data are available. Alternatively, the gateway 220 may configure the sensors $210_i$ to transmit data in a polling mode, wherein the gateway polls some of the sensors at scheduled intervals or based on the anticipated contribution from each sensor at a given time and only the polled sensors can transmit data to the gateway 220.

In some embodiments, the sensors are configured to detect a significant event, wherein the significant event may be an external event or signal which the sensing system 200 is configured to observe and analyze as well as a signal generated by the system 200 itself as part of the calibration, mapping, or configuration of the system 200. The gateway device 220 may then be configured to selectively control the plurality of sensors to switch between a first operation mode and a second operation mode, wherein: in the first operation mode, a first subset of the sensors are selected and configured to transmit outputs of the sensor portion of the decision engine and the decision engine is configured to determine if a significant event has occurred; the second operation mode is initiated if it is determined that the significant event has occurred; and in said second operation mode, a second subset of the sensors are selected and configured to transmit data useful for determining further information related to the significant event.

The gateway 220 may select the sensors $210_i$ which have to operate in a specific transmission mode based on various criteria. For example, each subset may comprise only sensors of a specific type, such as audio sensors or visual sensors; or, the sensors may be grouped in subsets based on their location; or, they may be grouped in subsets based on their performance and/or historical data. In an example use case all the sensors of a first subset are configured to transmit data, or inference outcomes, on the detection of a significant event and the sensors of a second subset are configured to provide sensor primary data for further analytics and modelling. The sensor primary data provided by the second subset of sensors can be stored and used to improve the outcome of the inference in the first subset of sensors or to provide additional data for further analysis of the event. The gateway may configure the second subset of sensors to start transmitting sensor primary data only after the even has been detected. In some applications, the same subset of sensor may be used for both steps, that is a subset of sensors may be initially configured to transmit inferencing outcomes on the occurrence of a significant event, and once the decision engine determines that the significant event has occurred, the same subset of sensors may be selected and re-configured to transmit further data for analysis. Subset herein also covers the case wherein the subset comprises all the sensors in the plurality of sensors.

Each subset of sensor may be configured to transmit in a continuous-transmission mode wherein the sensor transmit data as soon as the significant event is detected or in a polling mode wherein the sensors only transmit data when polled by the gateway. In an example use case of the system 200, all sensors 210 are configured to detect a significant event X by performing data inference via the distributed layers 238 and to transmit the inferencing outcome to the gateway 220 as soon as they detect the event X. The inferencing outcomes data from the sensors are then aggregated at the gateway 220 and the gateway portion of the decision engine applies a cumulative thresholding to determine with increased accuracy if the significant event has occurred or not. This configuration will typically lead to transmission of redundant data to the gateway since multiple sensors respond to the same event X. The gateway 220 may be configured to instruct one or more sensors to stop sending data whenever a pre-specified accuracy or confidence level is reached. In particular, the gateway may instruct a specific sensor $210_i$ in the network to keep observing the event X until it detects the end of the significant event X and instruct all other sensors to stop sending data until an "ALL CLEAR EVENT X" signal is sent from the gateway to the sensors. Or, the gateway 220 may request the other sensors to observe other significant events or to transmit raw data for further analytics until the "ALL CLEAR EVENT X" signal is received.

In another example use case, the gateway 220 polls one or more sensors $210_i$ at regular intervals for collecting data towards a specific inference task, such as the classification of a significant event. The polling of the sensors may be based on the cumulative outcome of multi-sensor data previously provided to the gateway 220. In particular, the gateway 220 may be configured to select the sensors to poll based on input from the decision engine to choose sensors that are most likely to provide information related to the significant event with highest confidence. The sensors to be polled may further be selected based on which sensors previously transmitted conflicting or incomplete data or based on which sensors previously failed to detect any event data. Sensors may be ignored or deselected if they contribute duplicate data or data that is deemed by the decision engine to be unreliable. In certain conditions, the gateway 220 may start operating the system in polling mode specifically to detect whether one or more sensors which previously transmitted conflicting, incomplete or missing data are faulty or unreliable. If it is determined that a sensor is faulty or need maintenance or calibration, the gateway 220 may send a "STOP TRANSMIT" signal or a "SERVICE/CALIBRATE" request as appropriate.

Interim layers close to the output of a neural network are typically weighted output of various constructed attributes. Classification in the neural network layers 338 is sometimes achieved by comparing the probability of these attributes and providing the most likely classification outcome as output of the neural network, that is as the results of the inferencing outcome which are sent to the gateway 320. The neural network 338 may be configured to have a very low probability threshold for determining that a certain event has occurred, in order not to miss any significant event. This typically results in a lot of false positive detection being sent to the gateway 320. However, by combining the data from multiple sensors, the gateway 320 can easily eliminate the false positives. For example, the gateway 320 may know the estimated source location (determined from the sensors time delays as explained below with reference to Figure 7) and identify as false positive all detections which do not correspond to the source location. This reduces the probability of the cumulative statistical analysis at the gateway resulting in a false positive detection and improves the signal-to-noise ratio (SNR).

The model used at the gateway 220 for improving the accuracy of detection can further be improved by the server 250 (which might have more information in addition to the data from sensors, or simply have more processing capability). What is considered significant at the sensor level might be to ensure that no event of interest is missed (even at the cost of having false positives). What is considered significant at the gateway level might be to ensure that all the events deemed significant are worth being further processed by the servers. The sensor configuration in the system 200 will be deemed optimized from a system-level point of view if at any time it allows to achieve one of the following conditions: the gateway transmission to the server is within the bandwidth and latency constraints and do not miss any significant events (there could be some false positives but no event is missed); or, the gateway is able to handle all time-critical information locally without the server and allow very low latency response (the time-critical information may still be sent to server for confirmation later on).

Figure 3 is a schematic diagram of a sensing system 300 according to further embodiments of the present disclosure wherein the gateway comprises a decoder module 370. Corresponding reference numerals and variables between Figures represent common features. The gateway 320 corresponds to the gateway 120 and 220 of Figure 1 and 2; the plurality of sensors 310 corresponds to the plurality of sensors 110 and 210 of Figure 1 and 2; and so on.

The distributed decision engine 330 comprise a distributed deep neural network and each sensor $310_i$ comprises several layers $338_i$ of the distributed deep neural network. The distributed layers $338_i$ may be used by the sensors to perform feature extraction, or auto-encoding of sensor primary data or results of inferencing outcomes, according to the gateway's configuration of each sensor. The decoder module 370 may comprise a plurality of neural network layers $372_i$ configured to receive in input the autoencoded data from the corresponding sensor $310_i$ and to output decoded data which can be fed into the central neural network layers 336 of the distributed deep neural network.

In the embodiments according to the present disclosure, the transmission of data from the sensors to the gateway is typically not instantaneous and the data transmitted by the sensors are received at the gateway with a time delay which may vary for each sensor. The communication channels for transmitting data may be, and typically are, less than the sensors in the sensing system and therefore data may not be collected instantaneously and simultaneously from all sensors. Furthermore, the gateway may configure the sensors to store the data in a buffer till a significant event occurs or till the gateway polls the sensor to send the data. Moreover, the time delay may vary due to the sensors being deployed at different distances from the gateway, or due to the sensors working in different operation modes and/or due to each sensor having to transmit larger/smaller packets of data than other sensors, among other factors. Therefore, time-alignment of the sensor data collected at the gateway is required for data aggregation. This is illustrated with reference to the embodiments of Figure 3.

In the system 300, each of the sensors $310_i$ has an internal time counter and all data transmitted from the sensors $310_i$ to the gateway 320 is time-stamped, that is, the sensors $310_i$ are configured to append to each data a time value indicating the generation time of the data, such that the gateway 320 can aggregate the data according to their time-stamp.

The gateway device 320 further comprises a synchronization module 360 to synchronize the data received at the gateway 320 by the sensors $310_i$ based on the associated time stamps. Methods for synchronizing sensor data with the gateway time-base and for correlating the sensors data are well-known to and can be implemented by any person skilled in the art.

The gateway 320 is configured to initialize the time-stamping of the sensors such that all data time-stamps can be correctly synchronized with respect to a same point in time by the synchronization module 360. For example, the counters in the sensors $310_i$ may be synchronized with respect to a master clock implemented in the gateway 320. Or, the gateway may synchronize the time-stamped data by keeping track of the relative delay of the internal time counter of each sensor with respect to a synchronization signal, as illustrated in Figure 4.

Figure 4 is a flow chart illustrating an example method for initializing the time stamping in the system 300. At step 402, the gateway 320 transmits to all sensors a SYNC signal. The SYNC signal is typically a radio-frequency signal, although other types of signals may be used. At step 404, the SYNC signal is recorded at the gateway at a time tGW_SYNC and is recorded at each sensor at a time $S_i$_SYNC (initial time stamp). At step 406, the gateway polls the sensors which send the initial time stamps $S_i$_SYNC. At step 408, for each sensor the gateway computes and record the difference $tS_i$_diff between each sensor's initial time stamp and tGW_SYNC. At step 410, the gateway configures the sensors to operate in a specific transmission mode as described above. At step 412, the time stamps $tS_i$_DATA of the data sent by the sensors are synchronized by the synchronization module so that all time stamps are translated to a common time basis before data aggregation. The synchronized time stamps are computed according to $tS_i$_DATAX = $tS_i$_DATA - $tS_i$-diff.

The gateway 320 may also initialize the time stamping by using an external event as reference signal rather than a SYNC signal transmitted by the gateway 320 itself. For example, the gateway 320 may synchronize the counters in the sensor with respect to a significant event as identified by one of the sensors. The significant event may also be related to the mapping of the sensor spatial distribution, where one of the sensors is polled by the gateway in order to emit a signal to all the other sensors in the network.

During or after deployment of the sensors an external source may be located at various test points to allow the gateway 320 to map the sensors with respect to the source. This procedure can be used for calibration and testing of the system both during and after the deployment of the sensors310 and the gateway 320.

It will be appreciated that various other methods may be used to achieve the synchronization of the data received by the gateway without departing from the scope of the present disclosure.

Once the time stamps are synchronized by the synchronization module 360, the synchronization module 360 can correctly align all sensor data prior to the data being used for further information processing. This allows the gateway portion 334 of the decision engine to correctly aggregate the data provided by the sensors $310_i$ for further processing, wherein the further processing may include providing the synchronized data to the central neural network layers 336, or to a statistical analysis module or any other computing module which may be implemented in the decision engine 330 or server 350.

In some embodiments, the gateway device is configured to determine a spatial distribution of one or more sensors, which are typically deployed at random locations not known to the gateway. This may done for example by providing a signal source at one or more test locations; measuring a time delay with which each sensor detects a signal emitted by said signal source; and deriving the distance between each sensor and said one or more test locations from the time delay. The signal source may be provided by placing an external device in pre-determined test locations, or the signal source may be provided by one or more of the sensors themselves and the test locations be randomly selected based on the location of the one or more sensors.

With reference again to the sensing system 300 of Figure 3, once the gateway 320 has initialized the time-stamping, the gateway 320 may determine the mapping, i.e. the relative spatial distribution, of the sensors, by polling one or more sensors to emit a signal which is detectable by the other sensors in the network. For example, the gateway may poll the one or more sensors to emit an acoustic signal. The signal will be detected with a different time delay by each sensor $310_i$, wherein the time delay is directly related to the distance of the sensor from the location at which the signal originated. The gateway 320 may then collect the time-stamped signal detection data from each sensor and derive the location of each sensor relative to each other from the synchronized time-stamps. Alternatively, an external source, such as an acoustic signal source, may be located at various known test locations during or after the deployment of the sensors and used as a signal source to map the sensors with respect to the test locations. This procedure can be used for calibration and testing of the system both during and after the deployment of the sensors $310_i$ and the gateway 320.

Figure 5 and Figure 6 are schematic diagrams illustrating an example method for determining the relative spatial distribution of a sub-group of sensors 500 in the plurality of sensor 310 once the time stamping initialization is complete. Figure 5 illustrates a first part of the method in which a set of cartesian axes x and y is identified and the (x, y) coordinates of each sensor with respect to said cartesian axes are determined. Figure 6 illustrates a second part of the method in which a third cartesian axis (z) is identified and the z-coordinate with respect to said third axis is determined for each sensor. Common reference numerals and variables between Figures represent common features.

With reference to Figure 5, the absolute distance of any sensor from a test location can be derived from the delay with which each sensor detects a signal emitted at the test location. Three random sensors $310_1$ (or S1), $310_2$ (or S2) and $310_3$ (or S3), located respectively at the vertices 502 (or A), 504 (or B) and 506 (or C) of a triangle 508 are identified. An x' axis (not shown) is aligned to the triangle edge AB, with the positive direction oriented from A to B, and an y' axis (not shown) is placed perpendicularly to the x' axis and oriented such that the sensor S3 is in the positive y half-plane.

For each sensor which is not part of the triangle 508, the vertex of the triangle 508 which is nearest to the sensor is identified and the distance of said vertex from the sensor is computed (dashed lines 520 in Figure 5). If a sensor is equidistant from two vertices, both vertices may be picked, as shown for sensors $310_8$ and $310_9$ which are connected by dashed line to both the vertices B and C. For each sensor nearest to A, the sensors are ordered according to their distances from A, with the sensor having the shortest distance first. The sensors which are nearest to B and C are ordered in a similar fashion. The height h of the triangle 508 relative to the longest edge of triangle 508 is identified. If two or more edges have equal length, either one can be selected. In the specific example of Figure 5, the longest edge is AC and the relative height is defined by segment 510. The height h and the two portions a (512) and b (514) of segment AC defined by the intersection 516 between the height h (510) and AC can then be determined by solving the following set of equations:

$$a^2 + h^2 = AB^2$$

$$b^2 + h^2 = BC^2$$

$$a + b = AC.$$

A new set of cartesian axes x" and y" (not shown) is defined, the new set having the origin in the intersection 516 and the positive direction of the x" axis oriented from said intersection to the vertex C. The x" and y" coordinates of the vertices of triangle 508 are determined with respect to the new set of cartesian axes as:

$$A' = (-a,\ 0)$$

$$B' = (0,\ -h)$$

$$C' = (b,\ 0),$$

where A', B' and C' provide the location with respect to axes x" and y" of sensors $310_1$, $310_2$ and $310_3$ respectively. The coordinates (x", y") of all other sensors are then determined according to their distance from the vertices A, B, C and the transformation relation between cartesian axes x', y' and cartesian axes x" and y".

Once all sensors relative (x", y") coordinates are determined, a final set of cartesian axes x (532) and y (534) can be constructed by:

- aligning the x axis to the two sensors which are furthest apart; in this specific example sensors $310_6$ and $310_{10}$, located at points D and E respectively;
- identifying a third sensor which is furthest apart from the x axis; in this specific example sensor $310_4$, located at point F;
- placing the y axis in correspondence of sensor F and oriented such that F is in the positive y half-plane.

Then all sensors' x and y coordinates are computed with respect to the final set of cartesian axes x and y.

With reference to Figure 6, once the cartesian axes x and y are identified, the z axis is defined as the line perpendicular to the plane defined by axes x and y and which crosses said plane at the intersection of the axes x and y. The z coordinate (606) of a sensor $310_i$ can then be determined from the projected coordinates ($x_i$, $y_i$, 0) of the sensor $310_i$ as follows:

i) computing the distance $d_{Fi}$ (602) between said sensor and the point F (0, $y_F$, 0);
ii) computing the distance $d_{Fi}'$ (604) between the projection of said sensor onto the x, y plane and the point F, according to

$$(d_i')^2 = (y_i - y_F)^2 + x_i^2$$

iii) computing the z coordinate of the sensor $310_i$ according to

$$z_i^2 = (d_{Fi})^2 - (d_{Fi}')^2.$$

It will be appreciated that the three sensors $310_1$, $310_2$ and $310_3$ are selected randomly among the plurality of sensors 500 and that any three other sensors may be used to form the initial triangle 508 and to determine the axes x and y. It will be further appreciated that many alternative methods of determining the spatial distribution of the sensors $310_i$ may be used without departing from the scope of the present disclosure.

Once the relative spatial distribution of the sensors is known, the gateway may then use the synchronized data and time-stamps provided by the synchronization module 350 to estimate the source location of a significant event or signal of interest, wherein the significant event or signal of interest may be provided by one of the sensors $310_i$ themselves or by an external source. For example, the gateway may first determine the relative spatial distribution of one or more sensors; then measure time delay with which each of said sensors detects the significant event; and finally extrapolate the estimated source location of the significant event from the time delay correlation of the sensors and their relative spatial distribution.

Figure 7 is a schematic diagram illustrating how the gateway 320 may estimate the source location of a signal of interest. In the scenario 700, the location of three sensors $310_i$, $310_{i+1}$ and $310_{i+}2$ with respect to an origin point 704 is known to the gateway 320, having previously been estimated by or transmitted to the gateway. At an initial time t0, a signal of interest, for example an acoustic signal, is generated at a source point 702. The three sensors $310_i$, $310_{i+1}$ and $310_{i+2}$ each detect the signal at a time t0+$\Delta t_i$, where $\Delta t_i$ is a detection time delay specific for each sensor which depends on the distance of the sensor from the source point 702. The sensor then transmits the signal detection data to the gateway 320 with the associated time stamp. The time-stamps are synchronized at the gateway 320 by the time-synchronization module 360 and used to extract the detection time delay $\Delta t_i$ of each sensor The detection time delays in conjunction with the sensors positions can then be used to determine the location of the source point 702. For example, the detection time delays of each sensor can be represented graphically as circumferences centred at the corresponding sensor and having diameter proportional to the time delays, as illustrated in Figure 7 by the circumferences $730_i$, $730_{i+1}$ and $730_{i+2}$. Then the location of the source point 702 can be estimated as the intersection of the circumferences $730_i$, $730_{i+1}$ and $730_{i+2}$. Alternatively, the gateway can introduce predetermined time delays to the data from sensors $310_i$, $310_{i+1}$ and $310_{i+2}$ for directional control and selective detection of an event that is located at 702.

At least three sensors will typically be needed to estimate the source location of a significant event. By polling signal detection data from additional sensors, the accuracy of the estimated location typically increases. However, additional sensors beyond a certain threshold number or sensors located at too long a distance from the source location, may provide redundant information without further improving the mapping of the source location. The gateway may then re-configure the operation mode of one or more sensors in order to optimize the system-level configuration of the sensing system. An example scenario is illustrated in Figure 8 with reference to the system 300.

Figure 8 is a schematic diagram illustrating an example scenario in which the gateway 320 re-configures some of the sensors $310_i$ in the system 300 based on the time-delay information of the sensors. In the scenario 800, the sensors $310_1$ through $310_{15}$ are instructed by the gateway 320 (not shown) to determine the location of the sensor $310_{13}$. This may due for example to a significant event having occurred in proximity of the sensor $310_{13}$ and the sensor $310_{13}$ having transmitted detection data related to the significant event to the gateway; or, it may be due to instructions received by the server 350, and so on. The gateway 320 may then detect that the time delay difference between the sensors $110_4$ (S4) and $110_8$ (S8) is within or close to the error of the sensors' time delay measurements and therefore the data provided by one of the two sensors are redundant and unlikely to improve the accuracy of the mapping of $310_{13}$. Therefore, the gateway 320 may decide to re-purpose one or both of the two sensors $110_4$ and $110_8$ for other functions and change their operation mode rather than using them for mapping the location of the sensor $310_{13}$.

It will be appreciated that although Figure 5 to 8 are described with explicit reference to the system of Figure 3, the methods illustrated in these Figures are applicable to other embodiments of the present disclosure, such as to embodiments which comprise a synchronization module but do not provide decoder functionalities.

Once the spatial distribution is known, the relative distance between the source of a significant event and multiple sensors can be used during the aggregation of sensor data at the gateway to create selective spatial detection from multiple sensor data correlation, thereby enabling directional detection capabilities such as beam forming.

The gateway 320 may be configured to add an intentional, or "beamforming", time delay $tS_i$_BF to each data time-stamp prior to performing data aggregation in order to achieve selective spatial detection via beamforming. Figure 9 is a flow chart illustrating a method 900 for implementing beamforming in the system 300. Common reference numerals and variables between Figures represent common features. The method 900 comprises all the steps of the method 400 of Figure 4. At step 914 the method further comprises using the synchronized sensor data time stamps for beamforming. In order to implement beamforming or other directional selective detection, a beamforming time delay $tS_i$_BF based on the distance between the event source and the different sensors is applied. In an example scenario, a sensor $S_i$ detects a significant event at $tS_i$_DATAX (as synchronized at the gateway) and a sensor $S_j$ detects the event at $tS_j$_DATAX. The distance of the sensor $S_i$ from the source location of the significant event corresponds to a beamforming time delay $tS_i$_BF and the distance of the sensor $S_j$ corresponds to a beamforming time delay $tS_j$_BF. Then, beamforming is achieved by correlating the data from sensor $S_i$ at time $tS_i$_DATAX - $tS_i$_BF to the data from sensor $S_j$ at time $tS_j$_DATAX - $tS_j$_BF.

The beamforming time delays $tS_i$_BF of a sensor $310_i$ with respect to a point of interest (x, y, z) where an external source is located may be determined according to the equation:

$$\mathrm{tS}_i_\mathrm{BF} = T_{coeff} * \sqrt{((x - x_i)^2 + (y - y_i)^2 + (z - z_i)^2)}$$

where $T_{coeff}$ is a coefficient chosen specifically for each system based on the propagation speed of the signal of interest and (x, y, z) is the location of the sensor $310_i$. By implementing beamforming in the data aggregation at the gateway, any signal which is not coming from the target location of the significant event will be automatically discarded, since it will not arrive to the sensors with the time delay expected for the source location of the significant event and therefore aggregated data from multiple sensors with specified time delay for each sensor will not be aligned for the data related to the significant event from another location other than the target location.

In some embodiments wherein the sensing system is configured to implement beamforming, a zero depth bounded plane is defined by the spatial correlation of the sensors and the maximum range of beamforming in z-axis that is perpendicular to the plane is determined by the minimum detectable time difference between the sensors at opposing edges of the boundary of the sensor array.

In an example use case scenario of the sensing system 300, the system 300 is configured to collect data related to a particular event X. In the current example, the gateway 320 configures the sensors $310_i$ to transmit to the gateway inferencing data only, until one or more of the sensors detect the significant event. Once the gateway 320 receives the data related to the detection of the significant event X, the gateway 320 instructs the sensors $310_i$ to collect and transmit additional sensor primary data for a predetermined period of time $t_{event}$. The inferencing data, in combination with their time stamp information, may be used to identify the source location of the significant event X and the additional data may be used to increase the accuracy of the event detection or to perform further analysis as needed. The gateway may use the spatial distribution of the sensors relative to the source of the significant event X to implement beamforming once the significant event X is detected, such that directional selective detection is achieved with respect to the source location of the significant event X. Each sensor $310_i$ may further be configured to store data locally on a revolving bases for a predetermined time $t_{buffer}$ until a trigger signal, such as the detection of the significant event by one of the sensors or a gateway trigger signal, is received. Once the interrupt signal is received, the sensors record the additional data for the predetermined time interval $t_{event}$. The data collected during the predetermined time interval $t_{buffer}+t_{event}$ are then time stamped and sent to the gateway 320 and the sensor collection and/or transmission of further data is paused to allow the gateway 320 to synchronize and process the data. It will be obvious to anyone familiar with the art that the $t_{buffer}$ time interval should be long enough to ensure that no relevant data are missed and similarly the $t_{event}$ interval should be selected taking into account an appropriate margin for time stamping accuracy and other system constraints such that all the sensor polled by the gateway can detected the significant event in its entirety.

In some embodiments, the distributed deep neural network is configured to determine the optimal configuration of the sensors for achieving a desired outcome without any explicit knowledge of the sensors' spatial distribution and/or time delay correlation. The distributed deep neural network simply determines the optimal sensors configuration based on which configuration provides the maximum correlation to the desired output. For example, the desired output may be detecting a significant event at a target source location and successfully discarding events at other locations and/or false positives. Determining the optimal sensors configuration may then comprise the distributed deep neural network automatically determining intentional time delays to be applied to the time-stamps of the sensor data without any explicit knowledge of the spatial distribution of the sensors; or, the deep neural network may determine the optimal configuration of sensors which provides maximum correlation with the desired outcome without any preconceived notion about beamforming and time correlation, simply because this configuration of sensors will provide the maximum correlation to the desired output.

The inputs of the gateway may be configured during the training of the distributed neural network corresponding to the specified classification or other significant patterns of the aggregated data. Following a validation test and training at the gateway one can determine the optimum configuration of each sensor that provides the desired output of the central deep neural network layers, implemented at the gateway. The distributed neural network, implemented in the sensors, may then be re-trained at any time in order to provide maximum correlation to the inputs of the central neural network layers such that the desired output of the central neural network layers is achieved without any explicit knowledge of the changes in the environment or the sensor device operating conditions.

With reference to the embodiments of Figure 3, data aggregation at the gateway 320 may be combined with the decoding function such that autoencoding at the sensor $310_i$ and decoding at the gateway 320 is unique for each sensor $310_i$ and it combines the typical functionality of an encoder, such as compression and encryption, with purpose driven data aggregation. A novel autoencoder/decoder defined in this manner can be constructed with fewer neural network layers and with lower latency. In this novel autoencoder/decoder implementation, the synchronization module and the decoder module may be implemented as a single module and the neural network layers $372_i$ may automatically apply intentional time delays to each input of the gateway portion of the decision engine prior to data aggregation in order to achieve beamforming and/or maximum correlation with the desired outcome.

It will be appreciated that the sensing systems according to the present disclosure may operate with any suitable communication protocol. For example, the systems according to the present disclosure may operate with an adaptive communication protocol which takes advantage of network slicing functionalities, such as protocols employed in 5G networks, in which the gateway determines which network resources should be allocated to a specific sensor based on the real-time significance of the data provided by said sensor and/or other system settings.

It will be appreciated that the components and method steps described above with reference to specific embodiments may be interchangeable and that many other embodiments may be obtained by combining individual components and methods steps in different ways without departing from the scope of the present disclosure.

The sensing systems according to the present disclosure may comprise multiple clusters of sensors each responding to a local gateway, or edge gateway, wherein each cluster of sensors and local gateway operate as described above. A central gateway may then be used to aggregate the data of the local gateways, wherein the central gateway operates in an analogous way to the local gateways in order to achieve large-scale optimization of the overall system.

The sensing systems and methods according to the present disclosures may be used in a large variety of applications, such as area monitoring, healthcare monitoring, human activity recognition, environmental or earth monitoring, industrial monitoring, military surveillance, to name just a few. The sensing systems according to the present disclosure may be implanted, wearable, or environment-embedded.

Some example applications of the embodiments of the present disclosure will now be illustrated with reference to the system 300 o Figure 3.

In some embodiments, the plurality of sensors $310_i$ comprises a mix of sound sensors, vibration sensors, and digital accelerometers which are deployed underneath a railway car and which have wireless connectivity to a gateway deployed on board the same railway car. The sensors $310_i$ comprise pre-processing blocks and the first few layers of a distributed deep neural network. The pre-processing blocks may comprise for example Short-Time-Fourier-Transform (STFT), time-delay integrators and differentiators, wavelet transforms or other types of digital signal processing (DSP) blocks. The pre-processing blocks generate multiple inputs for the distributed neural network layers $338_i$. The pre-processing block and the distributed neural network layers $338_i$ may be implemented on the same silicon device as the sensor's analog front end. The gateway on board the railway car comprises the central layers 336 of the distributed neural network which receive in input autoencoded data output by the distributed neural network layers $338_i$.

Another example scenario in which the embodiments of the present disclosure may be used is illustrated in Figure 10. Common reference numerals and variables between Figures represent common features.

In this scenario the gateway 320 (not shown) may configure the sensors $310_i$ to work in any of the operation modes described with reference to previous embodiments and Figures. For example, the gateway 320 may allow all sensors $310_i$ to transmit as a significant events occur; or the gateway 320 may poll the sensors $310_i$ at scheduled intervals or based on the anticipated contribution from a specific sensor at a given time and only allow the sensors to transmit data when polled. In this example scenario, the plurality of sensors $310_i$ comprises one or more acoustic sensors which are placed on both side of a railway track 1002. The sensors may move over time due to environmental elements and require spatial location calibration post deployment. The sensors $310_i$ are configured to detect potential cracks forming in the tracks 1002 based on the relative magnitude of sound waves in the frequency range of 6kHz to 13kHz. The sensors $310_i$ may also be configured to identify acoustic events related to a passing train which brushes against the vegetation 1004.

As an example, the gateway 320 can configure the sensors shown in Figure 10 to perform the following:

- Sensors $310_3$, $310_6$ to detect potential cracks as the train passes by;
- Sensors $310_1$, $310_2$, $310_4$ to detect the train passing the vegetation 1004, with beamforming applied to eliminate unrelated acoustic events coming from an adjacent road 1006;
- Sensors $310_8$, $310_9$ to detect potential cracks as the train passes by;
- Sensor $310_{10}$ to transmit raw data for further analysis by the server 350,

- Sensor $310_{11}$, $310_7$ to identify when a significant event occurs at a railroad crossing 1008;
- $310_5$ can be configured to replace one of the sensors $310_1$, $310_2$, $310_3$, $310_6$ as needed;
- in case of failure of sensor $310_4$, sensor $310_3$ can be reconfigured as part of beamforming to detect the train passing the vegetation 1004 and $310_5$ can be reconfigured to detect potential cracks together with $310_6$.

Another example application, in which an improved signal to noise ratio can be achieved thanks to the embodiments of the present disclosure, is voice activity detection, which is typically triggered by the recognition of a predetermined keyword. With reference to Figure 10, the sensors $310_i$ may be configured to detect a voice activity from a source located at the railway crossing 1008. The keyword recognition accuracy of each individual sensor may be very low. Furthermore, in the current example the sensors are deployed in an environment which is typically noisy. Hence the sensors $310_i$ are likely to detect many false positives. The gateway 320 is configured to aggregate the data from all sensors $310_i$ with the corresponding time delays with respect to the target source at the railroad crossing. Any false trigger, such as keywords uttered from a location which is not close to the railway crossings, will then be easily identified and discarded by the gateway, since the time delayed signals from most of the sensors will have no correlation.

In a further example application, the sensors comprise MEMS microphones and are deployed in an environment at locations which are unknown or not known with enough accuracy for the system to compute a definitive response of the sensors' phase array. Therefore, the gateway is configured to determine the spatial phase array of the distributed sensors after deployment. The MEMS microphones can be stimulated to emit a sound signal. During an initialization phase, each sensor $310_i$ in turn receives an EMIT signal by the gateway 320 and emits a signal which is detected and time stamped by all other sensors. The gateway 320 collects the time stamps information from all the sensors and then send the EMIT signal to the following sensor. The synchronization module 360 then collects the time delay information and applies the corresponding time delay to each input of the central neural network layers 336. The gateway 320 may configure each sensor $310_i$ to communicate to the corresponding input of the central neural network layers 336 such that the sensor data are correctly time-aligned when fed to the central neural network layers. One way to align each sensor to the respective input of the neural network is by implementing network slicing or spectrum allocation depending on the communication protocol used. The MEMS system configured and initialized in this manner can then start operating as a phase sensor array and be employed to achieve beamforming with irregularly deployed sensor arrays.

The MEMS system described above employs acoustic sensors for both the initialization of the system and for collecting phase array data. In a variant of the above embodiment, the MEMS system may comprise both sound sensors and LED or laser sensors, wherein the sound sensors are used for the initialization of the system and the LED or laser sensors are used for collecting the data once the system is configured and operates as a phase sensor array. In a further specific embodiment, the MEMS system described above are used with ultrasound signals at frequencies above 20 kHz.

In yet other example applications of the system 300, the gateway 320 may be located on a train and the sensors $310_i$ may be located on a railway car of the train. For example, the sensors $310_i$ may be deployed at or within a window pane of a railway car. However the sensors $310_i$ may also be provided at other locations inside or outside the railway car, such as on the top of the railway car, embedded in the walls of the railway car, embedded within the seats, the floor etc.

It will be appreciated that a train may comprise one or more railway cars and that each car may comprise one or more window panes. Sensors $310_i$ may be provided at or within each window pane in the train or only at or within some selected window panes.

**In** some embodiments of the system 300 for use in the current example applications, the relative locations of the sensors $310_i$ provided at or within the window panes can be determined according to methods described above. This allows for the relative locations of the sensors $310_i$ to be determined after their installation and for the sensors $310_i$ to operate as a phase correlated sensor array; that is acoustic phased array systems for capturing the acoustic wavefront information incident on all sensors forming the array taking into account time delay and spatial information. The relative locations of the one or more window panes at or within which the sensors $310_i$ are provided can also be estimated from the relative locations of the sensors.

The sensors $310_i$ of the present embodiments may comprise one or more acoustic sensors configured to detect acoustic waves generated by the moving train, as well as acoustic waves, or acoustic signals, which are generated or reflected by surrounding objects. The surrounding objects may include both stationary objects, such as vegetations or buildings in the environment surrounding the railway, and moving objects, such as cars on a nearby road or another train passing. The gateway 320 may configure said acoustic sensors to detect these acoustic waves and correlate the detected signals to the speed of the train in order to map the location of the surrounding objects and/or determine the distance of the surrounding objects from the train. This way a map of the surroundings of the train can be obtained.

The present embodiments may further comprise one or more active noise cancellation (ANC) modules and the one or more sensors may be configured to detect noise signals of various types so that the active noise cancellation modules can generate corresponding noise cancelling signals to achieve noise cancellation inside the railway car.

For example, the system 300 may comprise one or more speaker devices, the sensors $310_i$ may comprise acoustic sensors and the ANC modules may be configured to receive in input acoustic signals detected by the acoustic sensors and to control the speaker devices in order to generate corresponding counter-balancing, or noise cancelling, acoustic signals for the purpose of achieving localized acoustic noise cancellation at one or more locations inside the railway cars in which the sensors are located.

Said noise cancellation module(s) may be implemented within the central gateway 320 or within the sensors themselves.

The speaker devices may be common speakers located inside the railway cars; or, the system 300 may comprise actuators provided at the window panes sand configured to drive the window panes to generate vibrations such that the window panes themselves function as flat panel speakers. Said actuators may be attached to or embedded within the window panes and said actuators may be configured to receive instructions from the ANC module(s) and move the window panes to generate vibrations which counter-balance the acoustic signals detected by the sensors $310_i$, therefore providing noise cancellation inside the railway car in which the window panes are fitted.

The acoustic sensors and speaker devices of the above embodiments may be deployed across multiple railway cars such that the system 300 may use information collected by the front-most railway car to improve the noise cancellation performance of rear-most railway cars. This may be particularly advantageous if for example one or more sleeper railway cars are placed at the rear end of the train.

In some embodiments, the system 300 may be configured to perform active noise cancellation of all sounds detected by the acoustic sensors. In other embodiments, the gateway 320 may be configured to identify one or more types of acoustic waves and to only implement active noise cancellation with respect to some types of waves. For example, the gateway 320 may be configured to identify waves which correspond to sound generated by the train itself or train sound which is reflected by the surrounding object and waves which correspond to sound generated by surrounding moving or stationary objects and only implement active noise cancellation for the acoustic signals generated by the train This way the passengers on the train only perceive the noise of the surrounding environment. In addition or in alternative, the gateway 320 may be configured to categorize sounds detected by the sensors 310i as "pleasant" (e.g. vegetation or animal sounds) or "unpleasant" (e.g. car honking or person screaming) and to only cancel the unpleasant sounds.

The gateway 320 may be configured to receive acoustic signals detected by sensors located at the side of the railway, as previously explained with reference to Figure 10. In particular, the gateway may receive acoustic signals detected by the sensors at the side of the railway shortly before the train reaches the location of said sensors. These signals would not be contaminated by the train noise and may be used by the system 300 in order to re-play ambience sound within the railway cars.

In addition or in alternative to the above mentioned acoustic sensors, the sensors $310_i$ provided at or within the window panes, may also comprise vibration sensors configured to detect motion vibrations cause by the train travelling on the railway and the system 300 may comprise one or more active vibration cancelling modules and one or more vibration actuators configured to counter balance said motion vibrations for one or more users of the train. It will be appreciated by the person skilled in the art that the vibration sensors may also be provided at a different location of the railway car, such as in proximity of a passenger seat, so that the vibrations which are detected are as close as possible to the actual vibrations felt by a user of the train.

In some embodiments the sensors $310_i$ are located on a train whose railway cars have windows with double pains. and acoustic and/or vibration sensors are provided within or at an outer pane, whilst the actuators are provided within or at the inner pane.

In some embodiments still for use on a train, the system 300 comprises a surface coating with holographic acoustic wave reflection properties configured to provide more precise reconstruction of the acoustic waves and more precise active noise cancellation. The surface coating with holographic acoustic wave reflection properties may for example be a surface coating provided at a window pane of a railway car.

As will be obvious to the person skilled in the art, when two or more passengers are located at different positions within a railway car, the acoustic noise perceived by each passenger will be different depending on where each passenger is located within the railway car. Hence, in order to achieve active noise cancellation for each passenger, the ANC modules would need to generate localized acoustic waves which perfectly match the acoustic noise perceived by each individual passenger.

By employing a surface coating with holographic acoustic wave reflection properties it is possible to increase the degrees of freedom in reconstructing the acoustic waves detected by the sensors for a specific location. In particular, the ANC module(s) of the system 300 may be configured to modify the holographic properties of the surface coating and generate noise cancelling signals in order to achieve active noise cancellation at multiple locations inside the railway car.

In a further example application, one or more of the sensors $310_i$ are provided at the side of a railway and are configured to detect weather conditions. The sensors may be placed for example 1-2 miles away from each other and be configured to operate as a low power mesh network using network communication protocols such as LoRa (Long Range) low-power wide-area network modulation techniques.

The sensor array thus formed may be configured to provide spatial weather information that can be used to provide localized and up-to the minute micro-weather conditions along a railway track.

It will be appreciated that acoustic and motion vibration sensors are just two examples of the many types of sensors which could be deployed on a railway car for the purpose of detecting signals which can then be processed by the system 300 in order to improve passengers experience. Other types of sensors are also contemplated by the present disclosure.

It will be appreciated by the person skilled in the art that window panes comprising surface coatings with holographic acoustic wave reflection properties may also be provided independently of the system 300. In particular, according to an aspect of the present disclosure, a noise cancelling apparatus for use on a railway car of a train, comprises a surface coating with holographic acoustic wave reflection properties and a sensing system comprising: a plurality of sensors located on the railway car, a gateway device located on the train and configured to exchange data with the sensors, and one or more active noise cancelling modules. The plurality of sensors are configured to detect one or more noise signals; and the active noise cancelling modules are configured to: receive as an input the detected noise signals; and, based on said noise signals, modify the holographic acoustic wave reflection properties of the surface coating and generate noise cancelling signals in order to achieve active noise cancellation at multiple locations inside the railway car. Said sensing system may further comprise some or all of the features of the system 300.

In some applications, embodiments of the present disclosure comprise a first type of sensors which are low or ultra-low power sensors and a second type of sensors which operate in a higher power configuration compared to the first subset and which can provide more extensive data. The gateway may configure the first type of sensors to transmit inferred data such as event detection data, and the second type to transmit sensor primary data or autoencoded data. The gateway may further configure the second type of sensors to start transmitting data only when polled or once a significant event has been detected by the ultra-low power sensors. For example the ultra-low power sensors may be sound sensors configured to determine the source location of a significant event and the second type of sensors may be lidar scanners which are directed to the source location of the significant event and used to scan the area around the source location once the significant event has been detected.

In yet another application of the embodiments of the present disclosure, the plurality of sensor comprises image sensors and sound, vibration, and accelerometer sensors and the gateway comprises a connected vision system configured to store image data provided by the image sensors in a local short-term memory. The central neural networks layers 336 are configured to determine when a significant event has occurred based on the data provided by the sound, vibration, and accelerometer sensors. If a significant event is detected, the image data stored at the local short-term memory are transferred to a permanent storage, such as the cloud server or other local or remote storage, otherwise, if no event is detected after a predetermined period of time, the image data stored at the local short-term memory are discarded. The present embodiment may be used for example on a railway car which is connected to a cloud server via satellite communication as well as terrestrial network. When the gateway determines that a significant event has occurred the image data are transmitted to the servers, such that only relevant data are transmitted and bandwidth and power consumption are optimized. A network of trains connected this way is able to capture and transmit all significant images without overloading the communication networks, as would likely occur if all image data were transmitted to and processed in the cloud servers. Alternatively, the image processing could be performed within the gateway located on board the train, however this would also be more expensive and require more memory and processing power.

The embodiments of the present disclosure also have many implications for system level design and modelling, infrastructure and equipment maintenance, realtime monitoring and anomaly detection via the use of digital twins.

A digital twin is a virtual representation of a physical system, such as a circuit, a machine or even a whole factory, that spans its lifecycle. The digital twin of a physical system is updated from real world data of its physical counterpart.

With reference to the sensing system 100 of the present disclosure, any change to be implemented in the sensing system 100 may be determined (modelled and simulated) in a digital twin copy of the sensing system 100 before being implemented in the sensing system 100 .

If the digital twin of the sensing system 100 were to employ a fixed model of the sensing system 100, then every single data from the sensors $110_i$ would need to be input into the digital twin's model to ensure that the physical copy of the sensing system 100 and its digital twin counterpart evolve in an identical way. However, in embodiments where the sensing systems 100 comprise an integrated artificial intelligence component, this can be configured to track the deviation of the sensing system's response from the response of its digital twin counterpart.

In other words, by feeding the data output by the artificial intelligence component can be fed to the digital twin copy of the sensing system, it is not necessary to provide in input every single parameter of the sensing system 100 in order to mirror the real world behaviour of the system 100.

This is very beneficial since transferring all data of the sensors $110_i$ would be a cumbersome task, whereas in comparison the data of the AI component will generally be much less than the data of the sensors, whilst still ensuring no information is lost.

In other words, with sensing systems according to the present disclosure only some significant data need to be transmitted in order to make real-time corrections in the system response (or in the system model of its digital twin counterpart).

Since the proposed system is designed to identify the significant events including the system response deviations; transmission of data related to significant events and system deviations will be enough to maintain the accurate cyber representation of the digital twin. The system does not require all data to be transmitted to maintain the accurate cyber representation, it is possible to achieve a reduction in the data transmitted to be maintained at lower levels thereby enabling coverage of larger remote areas for a given bandwidth constraint. One such solution for the trackside solutions is to connect the distributed sensor arrays to satellite link which is typically limited to 20kbit bandwidth.

Figure 11 is a flow chart illustrating a sensing method 1100 according to a second aspect of the present disclosure. The method 1100 comprises: at step 1102, providing a plurality of sensors, a gateway device configured to exchange data with the sensors, and a distributed decision engine comprising one or more sensor portions provided at one or more of the sensors and a gateway portion provided at the gateway device, wherein each of the sensors is configurable to operate in a plurality of different transmission modes wherein the sensor transmits primary sensor data and/or outputs of the sensor portion of the decision engine; and, at step 1104, the gateway device selectively controlling the operation of the sensors and configuring the sensor transmission mode.

As mentioned above, one implementation of the disclosure provides noise cancellation for railway cars, and this is illustrated in figures 12-14. In figure 12, there are acoustic waves 1200 generated by a moving train 1202 and acoustic waves 1204 reflected by surrounding objects such as trees, as well as from the general environment. A plurality of acoustic sensors 1206 are provided, here there is one for each window pane of the railway car though it will be appreciated that other configurations are possible.

Figure 13 shows an internal side view of the railway carriage, showing the acoustic sensors 1206 on the windows 1300. The seats 1302 of the carriage may be provided with speakers 1304.

Figure 14 illustrates the modification of holographic acoustic wave reflection properties in order to achieve active noise cancellation at multiple locations inside the railway car. Figure 14A shows flat surface acoustic wave travel paths from window panels and figure 14B shows desired acoustic wave travel paths. Different holographic acoustic reflection surfaces 1400 are illustrated by the different hatching in the figure.

In conclusion, the embodiments according to the present disclosure provide wireless sensor network system which allows to achieve scalability and large-scale optimization in a large variety of applications, while meeting the power and bandwidth requirements of WSN systems and providing improved fault tolerance, a significant reduction in the network traffic and ability to handle redundancies as well as inconsistencies in a seamless fashion.

## Claims

**1.** A sensing system (100, 200, 300) comprising:

a plurality of sensors (110, 210, 310);
a gateway device (120, 220, 320) configured to exchange data with the sensors; and
a distributed decision engine (130, 230, 330) comprising one or more sensor portions (132, 232, 332) provided at one or more of the sensors and a gateway portion (134, 234, 334) provided at the gateway device (120, 220, 320);
wherein each of the sensors is configurable to operate in a plurality of different transmission modes, wherein the sensor transmits primary sensor data and/or outputs of the sensor portion (132, 232, 332) of the decision engine provided at said sensor; and the gateway (120, 220, 320) is arranged to selectively control the operation of the sensors (110, 210, 310) and to configure the sensor transmission mode;
**characterized in that**
the gateway device (120, 220, 320) is configured to apply an intentional time delay to data received from the sensors (110, 210, 310) wherein the intentional time delay is automatically determined based on which combination of delays provides maximum correlation with a desired outcome;
or wherein the gateway device (120, 220, 320) is configured to add an intentional time delay to a time-stamp associated with the data received from the sensors (110, 210, 310), wherein the intentional time delay is correlated to the distance of each sensor from a source location of a significant event.

**2.** The system of claim 1, wherein the decision engine (230, 330) comprises a distributed neural network with a plurality of layers (238, 236, 338, 336) and each of the one or more sensor portions (232, 332) of the decision engine comprises one or more of said layers (238, 338).

**3.** The system of claim 2, wherein the outputs of the one or more sensor portions (232, 332) of the decision engine comprise results of an inferencing outcome completed locally at the sensors, and/or autoencoded neural network outputs.

4. The system of any of claims 1 to 3, wherein the gateway device (120, 220, 320) is configured to selectively control the plurality of sensors (110, 210, 310) to switch between a first operation mode and a second operation mode, wherein

   in the first operation mode, a first subset of the sensors are selected and configured to transmit outputs of the sensor portion of the decision engine (130, 230, 330) and the decision engine is configured to determine if a significant event has occurred;
   the second operation mode is initiated if it is determined that the significant event has occurred; and
   in the second operation mode, a second subset of the sensors are selected and configured to transmit data useful for determining further information related to the significant event.

5. The system of claim 4, wherein the first subset comprises sensors which operate in a low power configuration and the second subset comprises sensors which operate in a higher power configuration compared to the first subset and which can provide more extensive data.

6. The system of any of claims 4 and 5, wherein the gateway device (120, 220, 320) receives a plurality of inputs from different sensors and the gateway portion (134, 234, 334) of the decision engine applies a cumulative thresholding to determine if the significant event has occurred; and/or wherein the gateway device (120, 220, 320) can configure one or more dedicated sensors to detect the end of the significant event.

7. The system of any of claims 4 to 6, wherein the sensors (110, 210, 310) are selectively polled based on input from the decision engine (130, 230, 330) to choose sensors that are most likely to provide a required information related to the significant event with highest confidence; and/or wherein sensors are ignored or deselected if they contribute duplicate data or data that is deemed by the decision engine (130, 230, 330) to be unreliable.

8. The system of claim 2 or claim 3, wherein each sensor has an internal time counter and all data are transmitted from the sensors to the gateway (220, 320) with a time-stamp; optionally wherein the gateway device (220, 320) synchronizes the time-stamps by keeping track of the relative delay of the internal time counter of each sensor with respect to a synchronization signal and all data received by the gateway are time-aligned according to their synchronized time-stamps.

9. The system of claim 8, wherein the gateway device (220, 320) is further configured to determine a spatial distribution of one or more sensors; wherein determining the relative spatial distribution of one or more sensor comprises:

   providing a signal source at one or more test locations;
   measuring a time delay with which each sensor detects a signal emitted by said signal source; and
   deriving the distance between each sensor and the one or more test locations from said time delay.

10. The system of claim 9, wherein the gateway (220, 320) is further configured to estimate the source location of a significant event; wherein estimating the source location of a significant event comprises

   determining the relative spatial distribution of one or more sensors;
   measuring a time delay with which each of said sensors detects the significant event; and
   extrapolating the estimated source location of the significant event from the time delay correlation of the sensors and their relative spatial distribution.

11. The system as claimed in any of the preceding claims , wherein the gateway (220, 320) comprises a synchronization module (360) to synchronize the data received at the gateway (320) by the sensors based on the associated time stamps; wherein the gateway is further configured to implement directional selective detection relative to the source location of the significant event by adding the intentional time delay to each synchronized time-stamp.

12. The system of claims 8 to 11 , wherein the distributed neural network is configured to determine the optimal configuration of each sensors for achieving a desired outcome without any explicit knowledge of the sensors' spatial distribution and/or time delay correlation; wherein for each input to the gateway portion (234, 334) of the decision engine, the distributed neural network is further configured to automatically apply the intentional time delay to said input.

13. The system of claim 11 or 12, wherein different types of sensors are provided; and a source location determined by one type of sensor is used to adjust a directionality of a second type of sensor.

**14.** The system of any of claims 1 to 13, wherein the gateway device (320) is located on a train (1202) and one or more of the sensors (310, 1206) are located on a railway car of the train (1202); optionally wherein the one or more sensors located on the railway car are deployed at or within a window pane (1300) of the railway car.

**15.** The system of claim 14 wherein

the one or more sensors (310, 1206) located on the railway car are configured to detect acoustic waves; and
the system is configured to correlate the acoustic waves detected by the said one or more sensors to a speed of the train in order to generate a map of an environment surrounding the train.

**16.** The system of claim 14 or 15, wherein

said one or more sensors (310, 1206) located on the railway car are configured to detect noise signals; and
the system comprises one or more active noise cancellation modules and one or more actuator devices, the one or more active noise cancellation modules being configured to
receive in input the noise signals detected by the sensors; and control the one or more actuator devices in order to generate noise cancelling signals for the purpose of achieving localized noise cancellation at one or more locations inside the railway car; optionally wherein
the system comprises a surface coating with acoustic holographic properties, the surface coating being provided inside the railway car and/or at one or more window panes (1300) of the railway car; and
the active noise cancellation modules are configured to modify the holographic acoustic wave reflection properties of the surface coating and generate noise cancelling signals in order to achieve active noise cancellation at multiple locations inside the railway car.

**17.** The system of claim 16, wherein

the noise signals are acoustic noise signals;
the one or more sensors (310, 1206) located on the railway car comprise acoustic sensors configured to detect said acoustic noise signals; and
the actuator devices are speaker devices (1304); optionally wherein the speaker devices (1304) comprise one or more actuators configured to drive one or more window panes (1300) of the railway car to generate vibrations such that the window panes (1300) themselves function as flat panel speakers.

**18.** The system of claim 16, wherein

the noise signals comprise motion vibration signals;
the one or more sensors (310, 1206) located on the railway car comprise motion vibration sensors configured to detect said motion vibration signals; and
the actuator devices are active suspension actuator devices.

**19.** A sensing method comprising

providing (1102) a plurality of sensors, a gateway device configured to exchange data with the sensors, and a distributed decision engine comprising one or more sensor portions provided at one or more of the sensors and a gateway portion provided at the gateway device;
wherein (1104) each of the sensors is configurable to operate in a plurality of different transmission modes wherein the sensor transmits primary sensor data and/or outputs of the sensor portion of the decision engine;
said sensing method comprising said gateway device selectively controlling the operation of the sensors and configuring the sensor transmission mode;
**characterized in that**
the gateway device is configured to apply an intentional time delay to data received from the sensors wherein the intentional time delay is automatically determined based on which combination of delays provides maximum correlation with a desired outcome;
or wherein the gateway device is configured to add an intentional time delay to a time-stamp associated with the data received from the sensors, wherein the intentional time delay is correlated to the distance of each sensor from a source location of a significant event.

## Patentansprüche

1. Erfassungssystem (100, 200, 300) umfassend:

   eine Vielzahl von Sensoren (110, 210, 310);
   eine Gateway-Vorrichtung (120, 220, 320), die dazu konfiguriert ist, Daten mit den Sensoren auszutauschen; und
   eine verteilte Entscheidungsmaschine (130, 230, 330), die einen oder mehrere Sensorabschnitte (132, 232, 332), die an einem oder mehreren der Sensoren bereitgestellt sind, und einen Gateway-Abschnitt (134, 234, 334), der an der Gateway-Vorrichtung (120, 220, 320) bereitgestellt ist, umfasst;
   wobei jeder der Sensoren dazu konfigurierbar ist, in einer Vielzahl von verschiedenen Übertragungsmodi zu arbeiten, wobei der Sensor primäre Sensordaten und/oder Ausgaben des Sensorabschnittes (132, 232, 332) der Entscheidungsmaschine überträgt, die an dem Sensor bereitgestellt ist; und das Gateway (120, 220, 320) dazu angeordnet ist, den Betrieb der Sensoren (110, 210, 310) selektiv zu steuern und den Sensorübertragungsmodus zu konfigurieren;
   **dadurch gekennzeichnet, dass**
   die Gateway-Vorrichtung (120, 220, 320) dazu konfiguriert ist, eine absichtliche Zeitverzögerung auf Daten anzuwenden, die von den Sensoren (110, 210, 310) empfangen werden, wobei die absichtliche Zeitverzögerung automatisch basierend darauf bestimmt wird, welche Kombination von Verzögerungen maximale Korrelation mit einem gewünschten Ausgang bereitstellt;
   oder wobei die Gateway-Vorrichtung (120, 220, 320) dazu konfiguriert ist, eine absichtliche Zeitverzögerung zu einem Zeitstempel hinzuzufügen, der mit den Daten assoziiert ist, die von den Sensoren (110, 210, 310) empfangen werden, wobei die absichtliche Zeitverzögerung mit dem Abstand jedes Sensors von einem Quellenort eines signifikanten Ereignisses korreliert ist.

2. System nach Anspruch 1, wobei die Entscheidungsmaschine (230, 330) ein verteiltes neuronales Netzwerk mit einer Vielzahl von Schichten (238, 236, 338, 336) umfasst und jeder von dem einen oder den mehreren Sensorabschnitten (232, 332) der Entscheidungsmaschine eine oder mehrere der Schichten (238, 338) umfasst.

3. System nach Anspruch 2, wobei die Ausgaben von dem einen oder den mehreren Sensorabschnitten (232, 332) der Entscheidungsmaschine Ergebnisse eines Ableitungsausgangs, der lokal an den Sensoren abgeschlossen ist, und/oder autocodierte neuronale Netzwerkausgaben umfassen.

4. System nach einem der Ansprüche 1 bis 3, wobei die Gateway-Vorrichtung (120, 220, 320) dazu konfiguriert ist, die Vielzahl von Sensoren (110, 210, 310) selektiv zu steuern, um zwischen einem ersten Betriebsmodus und einem zweiten Betriebsmodus umzuschalten, wobei

   in dem ersten Betriebsmodus ein erster Teilsatz der Sensoren ausgewählt und dazu konfiguriert ist, Ausgaben des Sensorabschnittes der Entscheidungsmaschine (130, 230, 330) zu übertragen, und die Entscheidungsmaschine dazu konfiguriert ist, zu bestimmen, ob ein signifikantes Ereignis aufgetreten ist;
   der zweite Betriebsmodus initiiert wird, wenn bestimmt wird, dass das signifikante Ereignis aufgetreten ist; und
   in dem zweiten Betriebsmodus ein zweiter Teilsatz der Sensoren ausgewählt und dazu konfiguriert ist, Daten zu übertragen, die zum Bestimmen von weiteren Informationen in Bezug auf das signifikante Ereignis nützlich sind.

5. System nach Anspruch 4, wobei der erste Teilsatz Sensoren umfasst, die in einer Konfiguration mit niedriger Leistung arbeiten, und der zweite Teilsatz Sensoren umfasst, die in einer Konfiguration mit höherer Leistung verglichen mit dem ersten Teilsatz arbeiten und die umfangreichere Daten bereitstellen können.

6. System nach einem der Ansprüche 4 und 5, wobei die Gateway-Vorrichtung (120, 220, 320) eine Vielzahl von Eingaben von verschiedenen Sensoren empfängt und der Gateway-Abschnitt (134, 234, 334) der Entscheidungsmaschine eine kumulative Schwellenwertberechnung anwendet, um zu bestimmen, ob das signifikante Ereignis aufgetreten ist; und/oder wobei die Gateway-Vorrichtung (120, 220, 320) einen oder mehrere dedizierte Sensoren konfigurieren kann, um das Ende des signifikanten Ereignisses zu detektieren.

7. System nach einem der Ansprüche 4 bis 6, wobei die Sensoren (110, 210, 310) basierend auf Eingabe von der Entscheidungsmaschine (130, 230, 330) selektiv abgefragt werden, um Sensoren zu wählen, die am ehesten eine erforderliche Information in Bezug auf das signifikante Ereignis mit höchster Zuverlässigkeit bereitstellen; und/oder wobei Sensoren ignoriert oder abgewählt werden, wenn sie doppelte Daten oder Daten beitragen, die durch die Entscheidungsmaschine (130, 230, 330) als unzuverlässig erachtet werden.

8. System nach Anspruch 2 oder Anspruch 3, wobei jeder Sensor einen internen Zeitzähler aufweist und alle Daten von den Sensoren an das Gateway (220, 320) mit einem Zeitstempel übertragen werden; wobei optional die Gateway-Vorrichtung (220, 320) die Zeitstempel synchronisiert, indem sie die relative Verzögerung des internen Zeitzählers von jedem Sensor in Bezug auf ein Synchronisationssignal verfolgt, und alle Daten, die durch das Gateway empfangen werden, gemäß ihren synchronisierten Zeitstempeln zeitlich ausgerichtet sind.

9. System nach Anspruch 8, wobei die Gateway-Vorrichtung (220, 320) ferner dazu konfiguriert ist, eine räumliche Verteilung von einem oder mehreren Sensoren zu bestimmen; wobei das Bestimmen der relativen räumlichen Verteilung von einem oder mehreren Sensoren Folgendes umfasst:

   Bereitstellen einer Signalquelle an einem oder mehreren Testorten;
   Messen einer Zeitverzögerung, mit der jeder Sensor ein Signal detektiert, das durch die Signalquelle emittiert wird; und
   Ableiten des Abstands zwischen jedem Sensor und dem einen oder den mehreren Testorten aus der Zeitverzögerung.

10. System nach Anspruch 9, wobei das Gateway (220, 320) ferner dazu konfiguriert ist, den Quellenort eines signifikanten Ereignisses zu schätzen; wobei das Schätzen des Quellenorts eines signifikanten Ereignisses Folgendes umfasst:

   Bestimmen der relativen räumlichen Verteilung von einem oder mehreren Sensoren;
   Messen einer Zeitverzögerung, mit der jeder von den Sensoren das signifikante Ereignis detektiert; und
   Extrapolieren des geschätzten Quellenorts des signifikanten Ereignisses aus der Zeitverzögerungskorrelation der Sensoren und ihrer relativen räumlichen Verteilung.

11. System wie in einem der vorhergehenden Ansprüche beansprucht, wobei das Gateway (220, 320) ein Synchronisationsmodul (360) umfasst, um die Daten, die an dem Gateway (320) durch die Sensoren empfangen werden, basierend auf den assoziierten Zeitstempeln zu synchronisieren; wobei das Gateway ferner dazu konfiguriert ist, direktionale selektive Detektion relativ zu dem Quellenort des signifikanten Ereignisses durch Hinzufügen der absichtlichen Zeitverzögerung zu jedem synchronisierten Zeitstempel zu implementieren.

12. System nach Anspruch 8 bis 11, wobei das verteilte neuronale Netzwerk dazu konfiguriert ist, die optimale Konfiguration von jedem Sensor zum Erreichen eines gewünschten Ausgangs ohne beliebige explizite Kenntnis der räumlichen Verteilung und/oder Zeitverzögerungskorrelation der Sensoren zu bestimmen; wobei für jede Eingabe in den Gateway-Abschnitt (234, 334) der Entscheidungsmaschine das verteilte neuronale Netzwerk ferner dazu konfiguriert ist, die absichtliche Zeitverzögerung automatisch auf die Eingabe anzuwenden.

13. System nach Anspruch 11 oder 12, wobei verschiedene Arten von Sensoren bereitgestellt sind; und ein Quellenort, der durch eine Art von Sensor bestimmt ist, verwendet wird, um eine Direktionalität einer zweiten Art von Sensor einzustellen.

14. System nach einem der Ansprüche 1 bis 13, wobei sich die Gateway-Vorrichtung (320) auf einem Zug (1202) befindet und sich einer oder mehrere der Sensoren (310, 1206) auf einem Eisenbahnwaggon des Zugs (1202) befinden; wobei optional der eine oder die mehreren Sensoren, die sich auf dem Eisenbahnwaggon befinden, an oder innerhalb einer Fensterscheibe (1300) des Eisenbahnwaggons eingesetzt werden.

15. System nach Anspruch 14, wobei

   der eine oder die mehreren Sensoren (310, 1206), die sich auf dem Eisenbahnwaggon befinden, dazu konfiguriert sind, akustische Wellen zu detektieren; und
   das System dazu konfiguriert ist, die akustischen Wellen, die durch den einen oder die mehreren Sensoren detektiert werden, mit einer Geschwindigkeit des Zuges zu korrelieren, um eine Karte einer Umgebung, die den Zug umgibt, zu erzeugen.

16. System nach Anspruch 14 oder 15, wobei

   der eine oder die mehreren Sensoren (310, 1206), die sich auf dem Eisenbahnwaggon befinden, dazu konfiguriert sind, Geräuschsignale zu detektieren; und

das System ein oder mehrere aktive Geräuschunterdrückungsmodule und eine oder mehrere Aktorvorrichtungen umfasst, wobei das eine oder die mehreren aktiven Geräuschunterdrückungsmodule dazu konfiguriert sind, am Eingang die Geräuschsignale, die durch die Sensoren detektiert werden, zu empfangen; und die eine oder mehreren Aktorvorrichtungen zu steuern, um Geräuschunterdrückungssignale für den Zweck zu erzeugen, lokalisierte Geräuschunterdrückung an einem oder mehreren Orten innerhalb des Eisenbahnwaggons zu erreichen; wobei optional

das System eine Oberflächenbeschichtung mit akustischen holographischen Eigenschaften umfasst, wobei die Oberflächenbeschichtung innerhalb des Eisenbahnwaggons und/oder an einer oder mehreren Fensterscheiben (1300) des Eisenbahnwaggons bereitgestellt ist; und

die aktiven Geräuschunterdrückungsmodule dazu konfiguriert sind, die holographischen akustischen Wellenreflexionseigenschaften der Oberflächenbeschichtung zu modifizieren und Geräuschunterdrückungssignale zu erzeugen, um aktive Geräuschunterdrückung an mehreren Orten innerhalb des Eisenbahnwagens zu erreichen.

**17.** System nach Anspruch 16, wobei

die Geräuschsignale akustische Geräuschsignale sind;

der eine oder die mehreren Sensoren (310, 1206), die sich auf dem Eisenbahnwaggon befinden, akustische Sensoren umfassen, die dazu konfiguriert sind, die akustischen Geräuschsignale zu detektieren; und

die Aktorvorrichtungen Lautsprechervorrichtungen (1304) sind; wobei optional die Lautsprechervorrichtungen (1304) einen oder mehrere Aktoren umfassen, die dazu konfiguriert sind, eine oder mehrere Fensterscheiben (1300) des Eisenbahnwaggons anzutreiben, um Vibrationen zu erzeugen, sodass die Fensterscheiben (1300) selbst als Flachbildschirmlautsprecher fungieren.

**18.** System nach Anspruch 16, wobei

die Geräuschsignale Bewegungsvibrationssignale umfassen;

der eine oder die mehreren Sensoren (310, 1206), die sich auf dem Eisenbahnwaggon befinden, Bewegungsvibrationssensoren umfassen, die dazu konfiguriert sind, die Bewegungsvibrationssignale zu detektieren; und

die Aktorvorrichtungen aktive Federungsaktorvorrichtungen sind.

**19.** Erfassungsverfahren, umfassend

Bereitstellen (1102) einer Vielzahl von Sensoren, einer Gateway-Vorrichtung, die dazu konfiguriert ist, Daten mit den Sensoren auszutauschen, und einer verteilten Entscheidungsmaschine, die einen oder mehrere Sensorabschnitte, die an einem oder mehreren der Sensoren bereitgestellt sind, und einen Gateway-Abschnitt, der an der Gateway-Vorrichtung bereitgestellt ist, umfasst;

wobei (1104) jeder der Sensoren dazu konfigurierbar ist, in einer Vielzahl von verschiedenen Übertragungsmodi zu arbeiten, wobei der Sensor primäre Sensordaten und/oder Ausgaben des Sensorabschnittes der Entscheidungsmaschine überträgt;

wobei das Erfassungsverfahren umfasst, dass die Gateway-Vorrichtung den Betrieb der Sensoren und das Konfigurieren des Sensorübertragungsmodus selektiv steuert;

**dadurch gekennzeichnet, dass**

die Gateway-Vorrichtung dazu konfiguriert ist, eine absichtliche Zeitverzögerung auf Daten anzuwenden, die von den Sensoren empfangen werden, wobei die absichtliche Zeitverzögerung automatisch basierend darauf bestimmt wird, welche Kombination von Verzögerungen maximale Korrelation mit einem gewünschten Ausgang bereitstellt;

oder wobei die Gateway-Vorrichtung dazu konfiguriert ist, eine absichtliche Zeitverzögerung zu einem Zeitstempel hinzuzufügen, der mit den Daten assoziiert ist, die von den Sensoren empfangen werden, wobei die absichtliche Zeitverzögerung mit dem Abstand jedes Sensors von einem Quellenort eines signifikanten Ereignisses korreliert ist.

## Revendications

**1.** Système de détection (100, 200, 300), comprenant :

une pluralité de capteurs (110, 210, 310) ;

un dispositif de passerelle (120, 220, 320) configuré pour échanger des données avec les capteurs ; et

un moteur de décision distribué (130, 230, 330) comprenant une ou plusieurs parties capteurs (132, 232, 332) prévues au niveau d'un ou de plusieurs des capteurs et une partie passerelle (134, 234, 334) prévue au niveau du dispositif de passerelle (120, 220, 320) ;

chacun des capteurs étant configurable pour fonctionner dans une pluralité de modes de transmission différents, ledit capteur transmettant des données de capteur primaires et/ou des sorties de la partie capteur (132, 232, 332) du moteur de décision prévu au niveau dudit capteur ;

et ladite passerelle (120, 220, 320) étant agencée pour commander sélectivement le fonctionnement des capteurs (110, 210, 310) et pour configurer le mode de transmission de capteur ;

**caractérisé en ce que** le dispositif de passerelle (120, 220, 320) est configuré pour appliquer un temps de retard intentionnel aux données reçues en provenance des capteurs (110, 210, 310), ledit temps de retard intentionnel étant déterminé automatiquement sur la base de la combinaison de retards qui fournit une corrélation maximale avec un résultat souhaité ;

ou ledit dispositif de passerelle (120, 220, 320) étant configuré pour ajouter un temps de retard intentionnel à un horodatage associé aux données reçues en provenance des capteurs (110, 210, 310), ledit temps de retard intentionnel étant corrélé à la distance de chaque capteur par rapport à un emplacement de source d'un événement significatif.

**2.** Système de la revendication 1, ledit moteur de décision (230, 330) comprenant un réseau de neurones distribué doté d'une pluralité de couches (238, 236, 338, 336) et chacune de ladite ou desdites parties capteurs (232, 332) du moteur de décision comprenant une ou plusieurs desdites couches (238, 338).

**3.** Système de la revendication 2, lesdites sorties du ou des parties capteurs (232, 332) du moteur de décision comprenant des résultats d'un objectif d'inférence atteint localement au niveau des capteurs, et/ou des sorties de réseau neuronal autocodées.

**4.** Système de l'une quelconque des revendications 1 à 3, ledit dispositif de passerelle (120, 220, 320) étant configuré pour commander sélectivement la pluralité de capteurs (110, 210, 310) afin de commuter entre un premier mode de fonctionnement et un second mode de fonctionnement,

dans le premier mode de fonctionnement, un premier sous-ensemble des capteurs étant sélectionnés et configurés pour transmettre des sorties de la partie capteur du moteur de décision (130, 230, 330) et ledit moteur de décision étant configuré pour déterminer si un événement significatif est survenu ;

ledit second mode de fonctionnement étant initié si la survenue de l'événement significatif est déterminée ; et dans le second mode de fonctionnement, un second sous-ensemble des capteurs étant sélectionnés et configurés pour transmettre des données utiles à la détermination d'autres informations relatives à l'événement significatif.

**5.** Système de la revendication 4, ledit premier sous-ensemble comprenant des capteurs qui fonctionnent dans une configuration de faible puissance et ledit second sous-ensemble comprenant des capteurs qui fonctionnent dans une configuration de puissance supérieure par rapport au premier sous-ensemble et qui peuvent fournir des données plus étendues.

**6.** Système de l'une quelconque des revendications 4 et 5, ledit dispositif de passerelle (120, 220, 320) recevant une pluralité d'entrées en provenance de différents capteurs et ladite partie de passerelle (134, 234, 334) du moteur de décision appliquant un seuillage cumulatif pour déterminer si l'événement significatif est survenu ; et/ou ledit dispositif de passerelle (120, 220, 320) pouvant configurer un ou plusieurs capteurs dédiés pour détecter la fin de l'événement significatif.

**7.** Système de l'une quelconque des revendications 4 à 6, lesdits capteurs (110, 210, 310) étant interrogés sélectivement sur la base d'une entrée provenant du moteur de décision (130, 230, 330) pour choisir des capteurs qui sont les plus susceptibles de fournir des informations requises relatives à l'événement significatif avec la plus grande confiance ; et/ou lesdits capteurs étant ignorés ou désélectionnés s'ils contribuent à des données en double ou à des données qui sont considérées par le moteur de décision (130, 230, 330) comme non fiables.

**8.** Système de la revendication 2 ou de la revendication 3, chaque capteur comportant un compteur de temps interne et toutes les données étant transmises des capteurs à la passerelle (220, 320) avec un horodatage ; éventuellement, ledit dispositif de passerelle (220, 320) synchronisant les horodatages en gardant une trace du retard relatif du compteur de temps interne de chaque capteur par rapport à un signal de synchronisation et toutes les données reçues par la passerelle étant alignées temporellement selon leurs horodatages synchronisés.

**9.** Système de la revendication 8, ledit dispositif de passerelle (220, 320) étant en outre configuré pour déterminer une distribution spatiale d'un ou de plusieurs capteurs ; ladite détermination de la distribution spatiale relative d'un ou de plusieurs capteurs comprenant :

la fourniture d'une source de signal au niveau d'un ou de plusieurs emplacements d'essai ;
la mesure d'un temps de retard avec laquelle chaque capteur détecte un signal émis par ladite source de signal ; et
la dérivation de la distance entre chaque capteur et le ou les emplacements d'essai à partir dudit temps de retard.

**10.** Système de la revendication 9, ladite passerelle (220, 320) étant en outre configurée pour estimer l'emplacement de source d'un événement significatif ; ladite estimation de l'emplacement de source d'un événement significatif comprenant

la détermination de la distribution spatiale relative d'un ou de plusieurs capteurs ;
la mesure d'un temps de retard avec lequel chacun desdits capteurs détecte l'événement significatif ; et
l'extrapolation de l'emplacement de source estimé de l'événement significatif à partir de la corrélation temporelle des capteurs et de leur distribution spatiale relative.

**11.** Système selon l'une quelconque des revendications précédentes, ladite passerelle (220, 320) comprenant un module de synchronisation (360) pour synchroniser les données reçues au niveau de la passerelle (320) par les capteurs sur la base des horodatages associés ; ladite passerelle étant en outre configurée pour mettre en œuvre une détection sélective directionnelle par rapport à l'emplacement de source de l'événement significatif en ajoutant le temps de retard intentionnel à chaque horodatage synchronisé.

**12.** Système des revendications 8 à 11, ledit réseau neuronal distribué étant configuré pour déterminer la configuration optimale de chaque capteur pour atteindre un objectif souhaité sans aucune connaissance explicite de la distribution spatiale et/ou de la corrélation de temps de retard des capteurs ; ledit réseau neuronal distribué étant en outre configuré pour appliquer automatiquement le temps de retard intentionnel à ladite entrée pour chaque entrée de la partie de passerelle (234, 334) du moteur de décision.

**13.** Système de la revendication 11 ou 12, différents types de capteurs étant fournis ; et un emplacement de source déterminé par un type de capteur étant utilisé pour régler une directivité d'un second type de capteur.

**14.** Système de l'une quelconque des revendications 1 à 13, ledit dispositif de passerelle (320) étant situé sur un train (1202) et un ou plusieurs des capteurs (310, 1206) étant situés sur un wagon de chemin de fer du train (1202) ; éventuellement, ledit ou lesdits capteurs situés sur le wagon de chemin de fer étant déployés au niveau ou à l'intérieur d'une vitre de fenêtre (1300) du wagon de chemin de fer.

**15.** Système de la revendication 14,

ledit ou lesdits capteurs (310, 1206) situés sur le wagon de chemin de fer étant configurés pour détecter des ondes acoustiques ; et
ledit système étant configuré pour corréler les ondes acoustiques détectées par ledit ou lesdits capteurs à une vitesse du train afin de générer une carte d'un environnement entourant le train.

**16.** Système de la revendication 14 ou 15,

ledit ou lesdits capteurs (310, 1206) situés sur le wagon de chemin de fer étant configurés pour détecter des signaux de bruit ; et
ledit système comprenant un ou plusieurs modules d'annulation active de bruit et un ou plusieurs dispositifs actionneurs, le ou les modules d'annulation active de bruit étant configurés pour
recevoir en entrée des signaux de bruit détectés par les capteurs ; et commander le ou les dispositifs actionneurs afin de générer des signaux d'annulation de bruit dans le but d'obtenir une annulation de bruit située au niveau d'un ou de plusieurs emplacements à l'intérieur du wagon ; éventuellement
ledit système comprenant un revêtement de surface avec des propriétés holographiques acoustiques, le revêtement de surface étant prévu à l'intérieur du wagon de chemin de fer et/ou au niveau d'une ou de plusieurs vitres de fenêtre (1300) du wagon de chemin de fer ; et
lesdits modules d'annulation active de bruit étant configurés pour modifier les propriétés de réflexion des ondes acoustiques holographiques du revêtement de surface et générer des signaux d'annulation de bruit afin d'obtenir une annulation active du bruit au niveau de multiples emplacements à l'intérieur du wagon de chemin de fer.

**17.** Système de la revendication 16,

lesdits signaux de bruit étant des signaux de bruit acoustiques ;
ledit ou lesdits capteurs (310, 1206) situés sur le wagon de chemin de fer comprenant des capteurs acoustiques configurés pour détecter lesdits signaux de bruit acoustiques ; et
lesdits dispositifs actionneurs étant des dispositifs de haut-parleur (1304) ; éventuellement, lesdits dispositifs de haut-parleur (1304) comprenant un ou plusieurs actionneurs configurés pour piloter une ou plusieurs vitres de fenêtre (1300) du wagon de chemin de fer afin de générer
des vibrations de sorte que les vitres de fenêtre (1300) fonctionnent elles-mêmes comme des haut-parleurs à panneau plat.

**18.** Système de la revendication 16,

lesdits signaux de bruit comprenant des signaux de vibration de mouvement ;
ledit ou lesdits capteurs (310, 1206) situés sur le wagon de chemin de fer comprenant des capteurs de vibrations de mouvement configurés pour détecter lesdits signaux de vibrations de mouvement ; et
lesdits dispositifs actionneurs étant des dispositifs actionneurs de suspension active.

**19.** Procédé de détection comprenant

la fourniture (1102) d'une pluralité de capteurs, d'un dispositif de passerelle configuré pour échanger des données avec les capteurs, et d'un moteur de décision distribué comprenant une ou plusieurs parties capteurs prévues au niveau d'un ou de plusieurs des capteurs et une partie passerelle prévue au niveau du dispositif de passerelle ;
(1104) chacun des capteurs étant configurable pour fonctionner dans une pluralité de modes de transmission différents, ledit capteur transmettant des données de capteur primaires et/ou des sorties de la partie capteur du moteur de décision ;
ledit procédé de détection comprenant ledit dispositif de passerelle commandant sélectivement le fonctionnement des capteurs et configurant le mode de transmission de capteur ;
**caractérisé en ce que** le dispositif de passerelle est configuré pour appliquer un temps de retard intentionnel aux données reçues en provenance des capteurs, ledit temps de retard intentionnel étant déterminé automatiquement sur la base de la combinaison de retards qui fournit une corrélation maximale avec un résultat souhaité ; ou le dispositif de passerelle est configuré pour ajouter un temps de retard intentionnel à un horodatage associé aux données reçues en provenance des capteurs, ledit temps de retard intentionnel étant corrélé à la distance de chaque capteur par rapport à un emplacement de source d'un événement significatif.

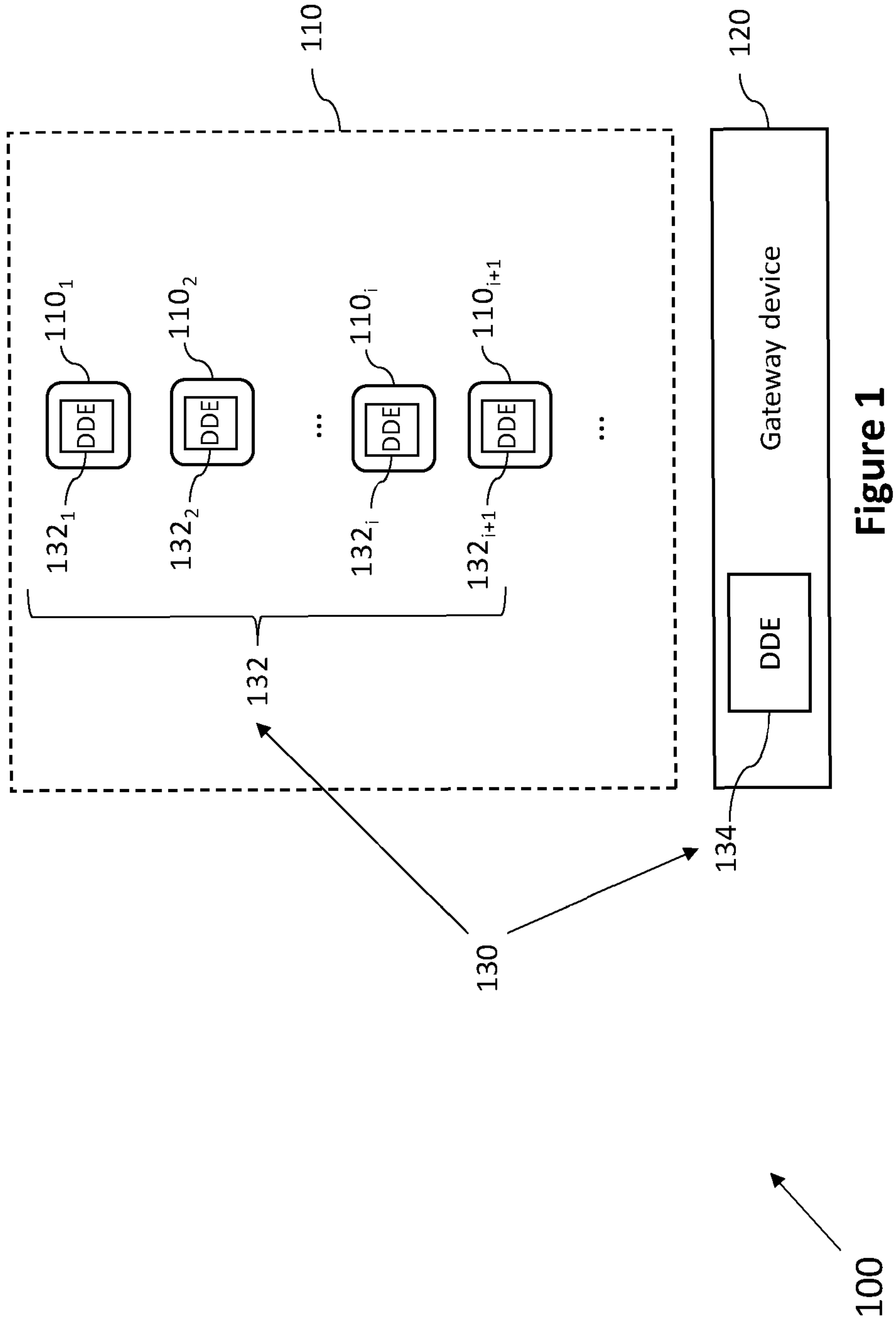
110
120
110₁
110₂
110ᵢ
110ᵢ₊₁
DDE
DDE
DDE
DDE
132₁
132₂
132ᵢ
132ᵢ₊₁
132
Gateway device
DDE
134
130
100

Figure 1

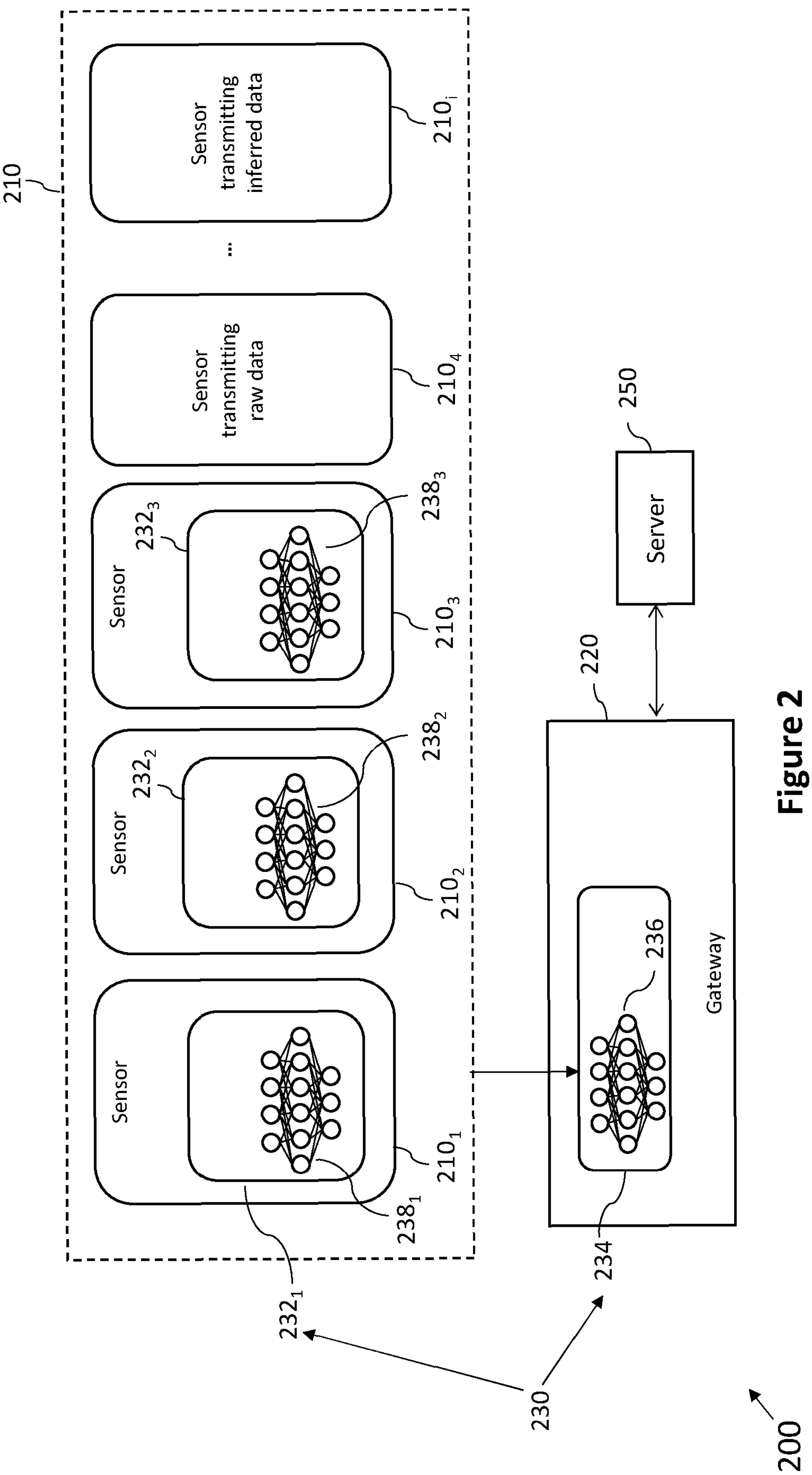

210
Sensor
Sensor
Sensor
Sensor transmitting raw data
Sensor transmitting inferred data
...
$210_1$
$210_2$
$210_3$
$210_4$
$210_i$
$232_1$
$232_2$
$232_3$
$238_1$
$238_2$
$238_3$
Gateway
234
236
220
Server
250
230
200


Figure 2

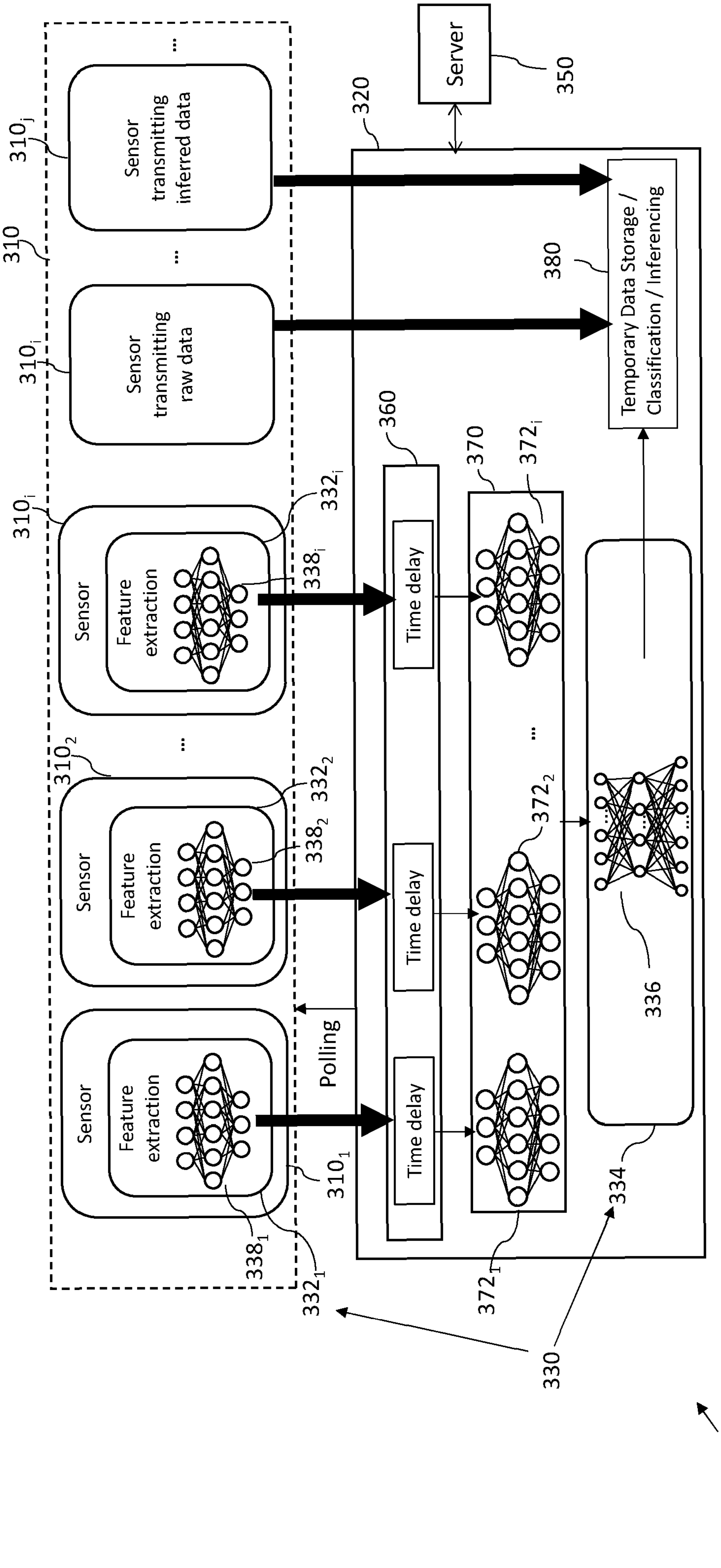
Sensor
Feature extraction
Sensor
Feature extraction
Sensor
Feature extraction
Sensor transmitting raw data
Sensor transmitting inferred data
Polling
Time delay
Time delay
Time delay
Server
Temporary Data Storage / Classification / Inferencing
310
310₁
310₂
310ᵢ
310ⱼ
320
330
332₁
332₂
332ᵢ
334
336
338₁
338₂
338ᵢ
350
360
370
372₁
372₂
372ᵢ
380
300
Figure 3

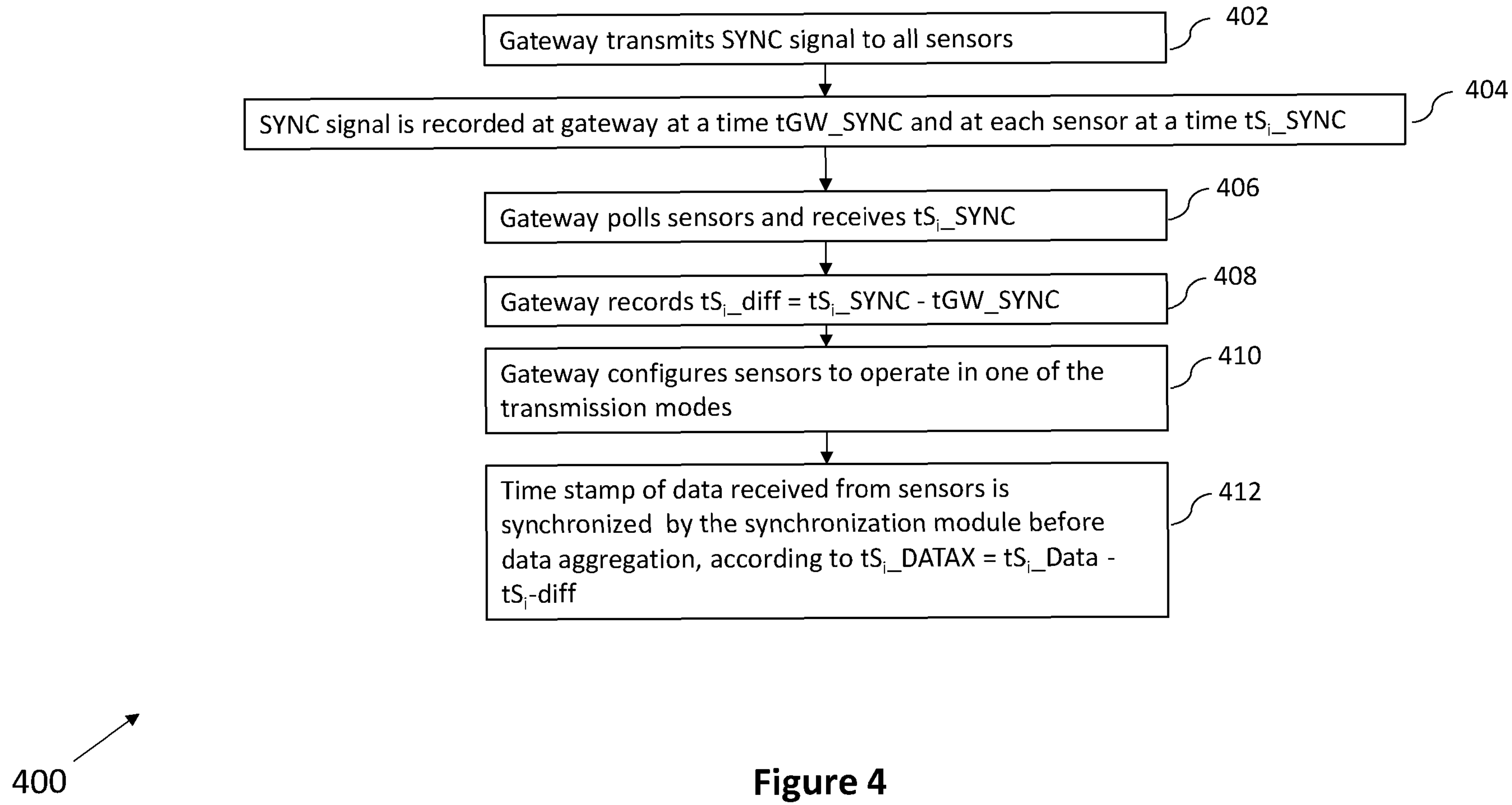
402
Gateway transmits SYNC signal to all sensors
404
SYNC signal is recorded at gateway at a time tGW_SYNC and at each sensor at a time $tS_i$_SYNC
406
Gateway polls sensors and receives $tS_i$_SYNC
408
Gateway records $tS_i$_diff = $tS_i$_SYNC - tGW_SYNC
410
Gateway configures sensors to operate in one of the transmission modes
412
Time stamp of data received from sensors is synchronized by the synchronization module before data aggregation, according to $tS_i$_DATAX = $tS_i$_Data - $tS_i$-diff
400

Figure 4

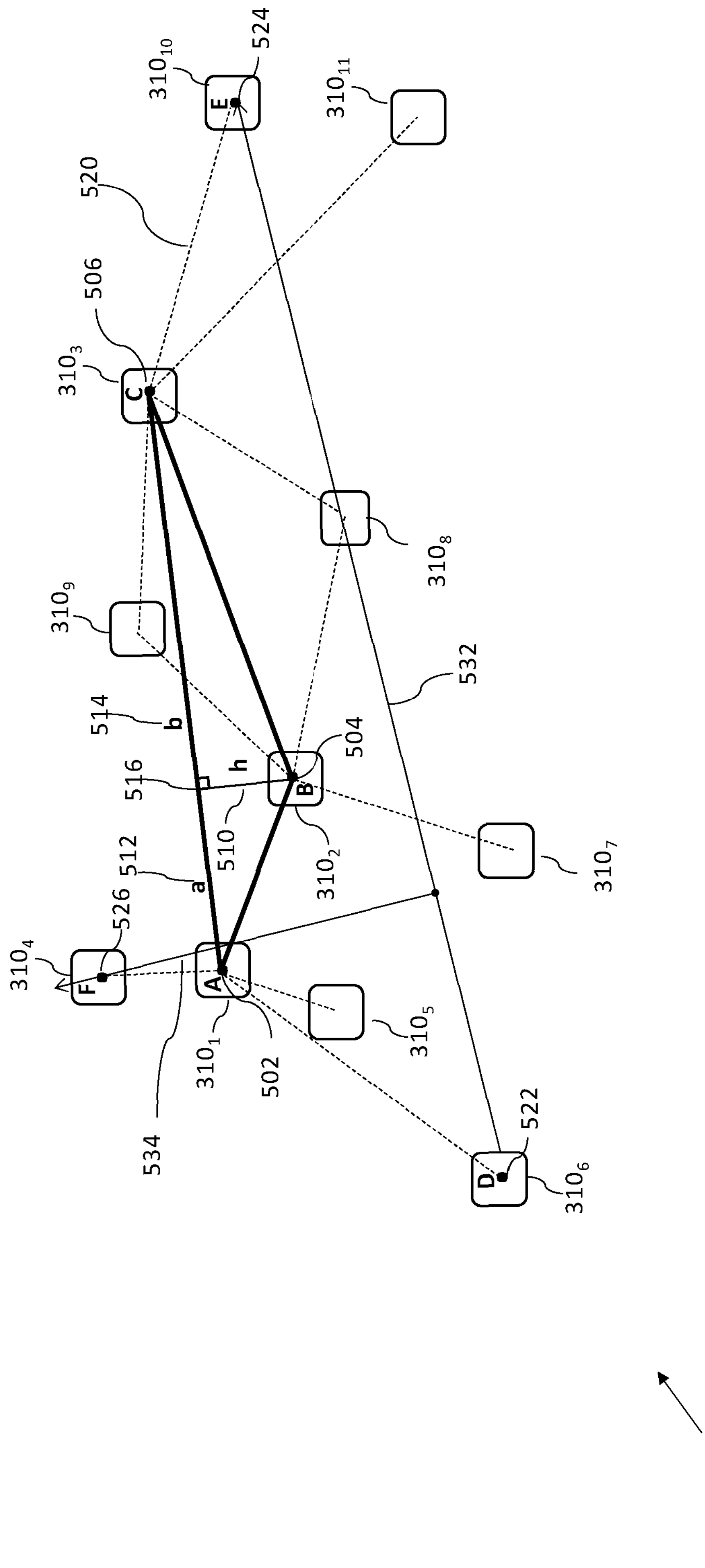

$310_{10}$
524
E
$310_{11}$
520
506
$310_3$
C
$310_8$
$310_9$
514
b
532
504
h
516
B
510
$310_2$
512
a
526
$310_4$
F
A
$310_7$
$310_5$
$310_1$
502
534
522
D
$310_6$
500


Figure 5

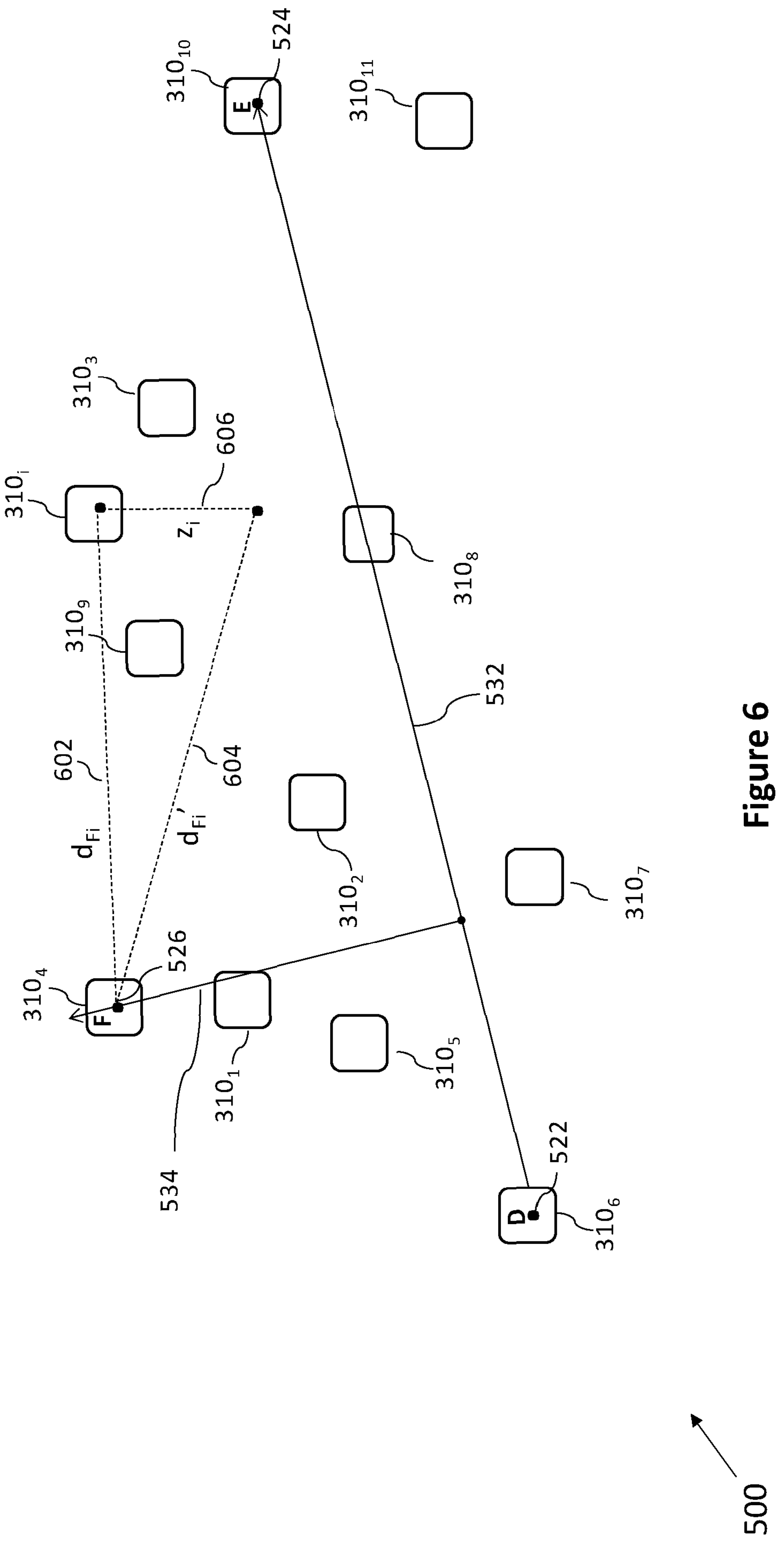
$310_{10}$
524
E
$310_{11}$
$310_3$
606
$310_i$
$z_i$
$310_8$
$310_9$
532
602
604
$d_{Fi}$
$d_{Fi}'$
$310_2$
$310_7$
$310_4$
526
F
$310_1$
$310_5$
534
522
D
$310_6$
500

Figure 6

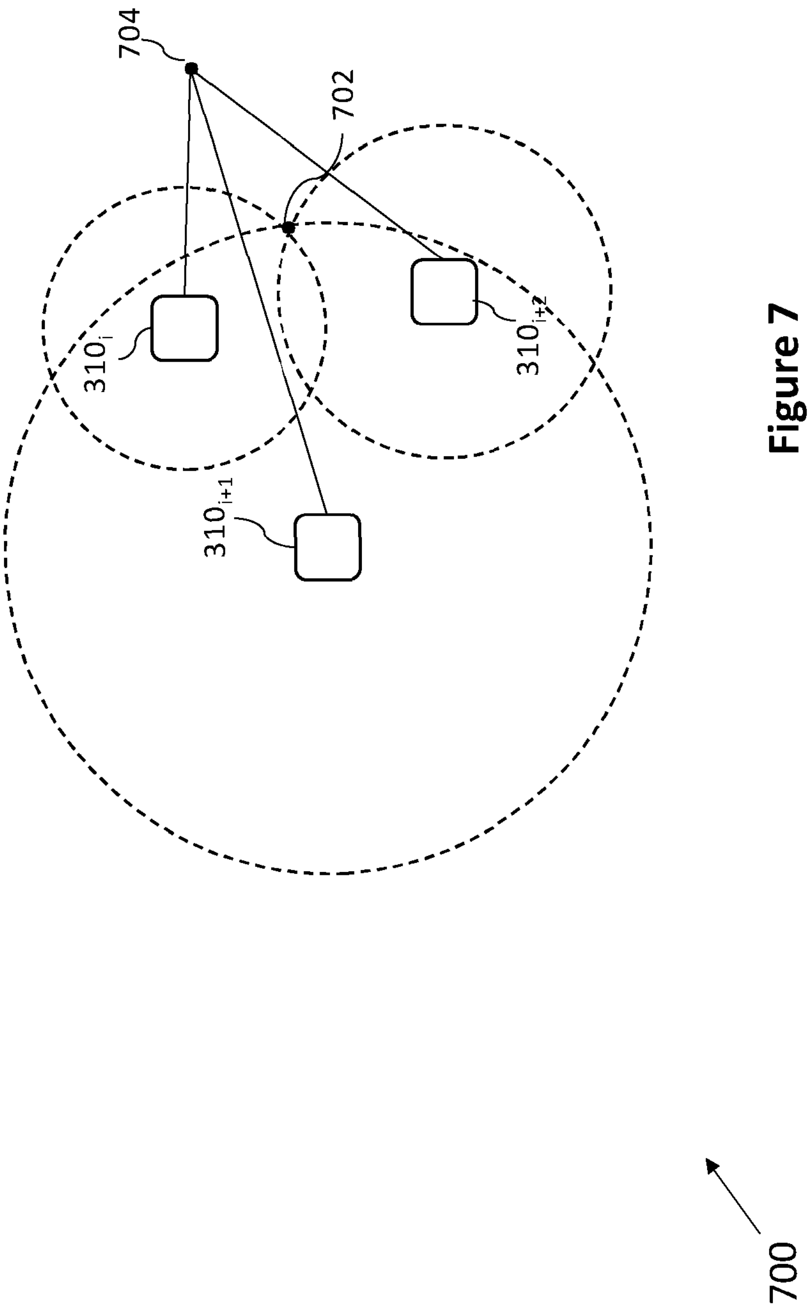


Figure 7

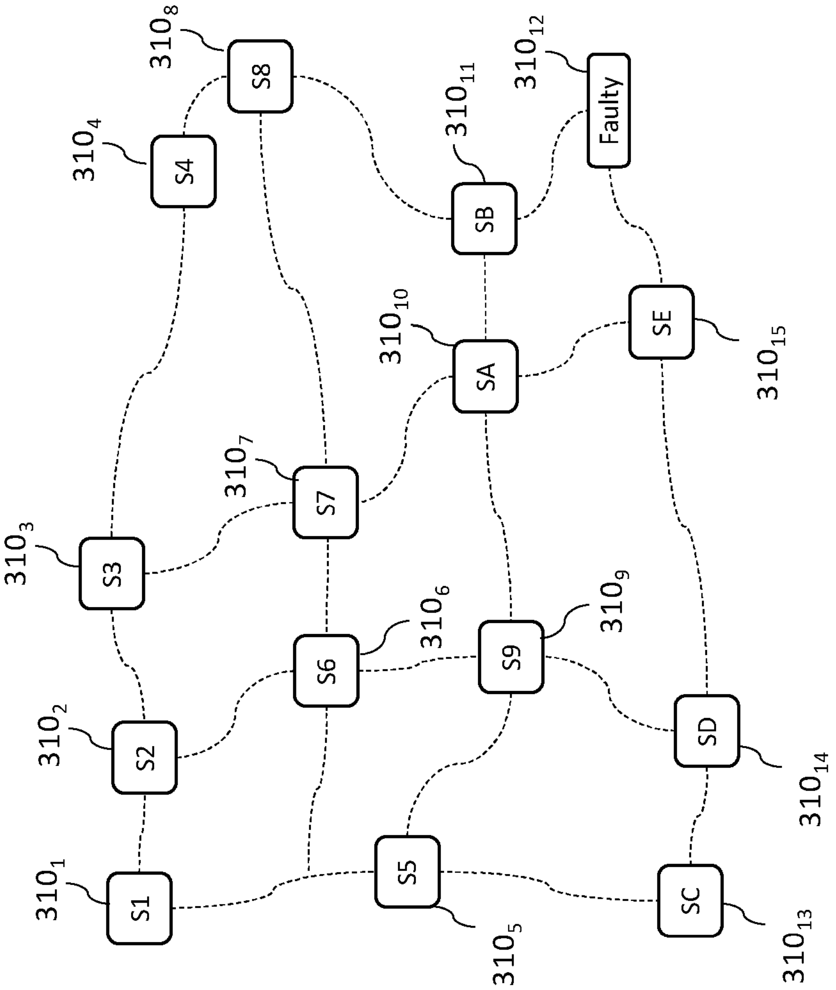
S1
S2
S3
S4
S5
S6
S7
S8
S9
SA
SB
SC
SD
SE
Faulty
$310_1$
$310_2$
$310_3$
$310_4$
$310_5$
$310_6$
$310_7$
$310_8$
$310_9$
$310_{10}$
$310_{11}$
$310_{12}$
$310_{13}$
$310_{14}$
$310_{15}$

Figure 8

800

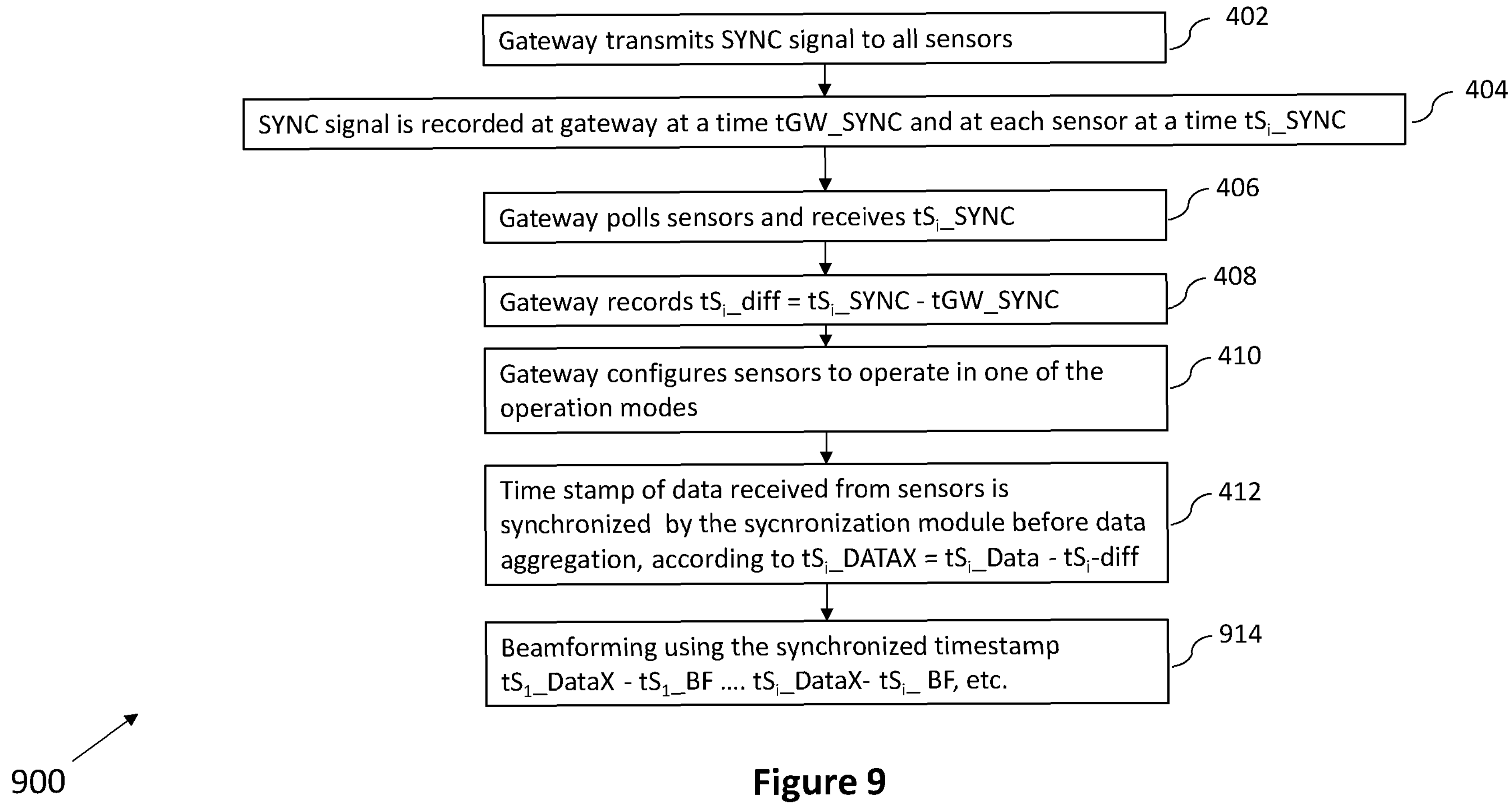
Gateway transmits SYNC signal to all sensors
402
SYNC signal is recorded at gateway at a time tGW_SYNC and at each sensor at a time $tS_i$_SYNC
404
Gateway polls sensors and receives $tS_i$_SYNC
406
Gateway records $tS_i$_diff = $tS_i$_SYNC - tGW_SYNC
408
Gateway configures sensors to operate in one of the operation modes
410
Time stamp of data received from sensors is synchronized by the sycnronization module before data aggregation, according to $tS_i$_DATAX = $tS_i$_Data - $tS_i$-diff
412
Beamforming using the synchronized timestamp $tS_1$_DataX - $tS_1$_BF .... $tS_i$_DataX- $tS_i$_ BF, etc.
914
900

Figure 9

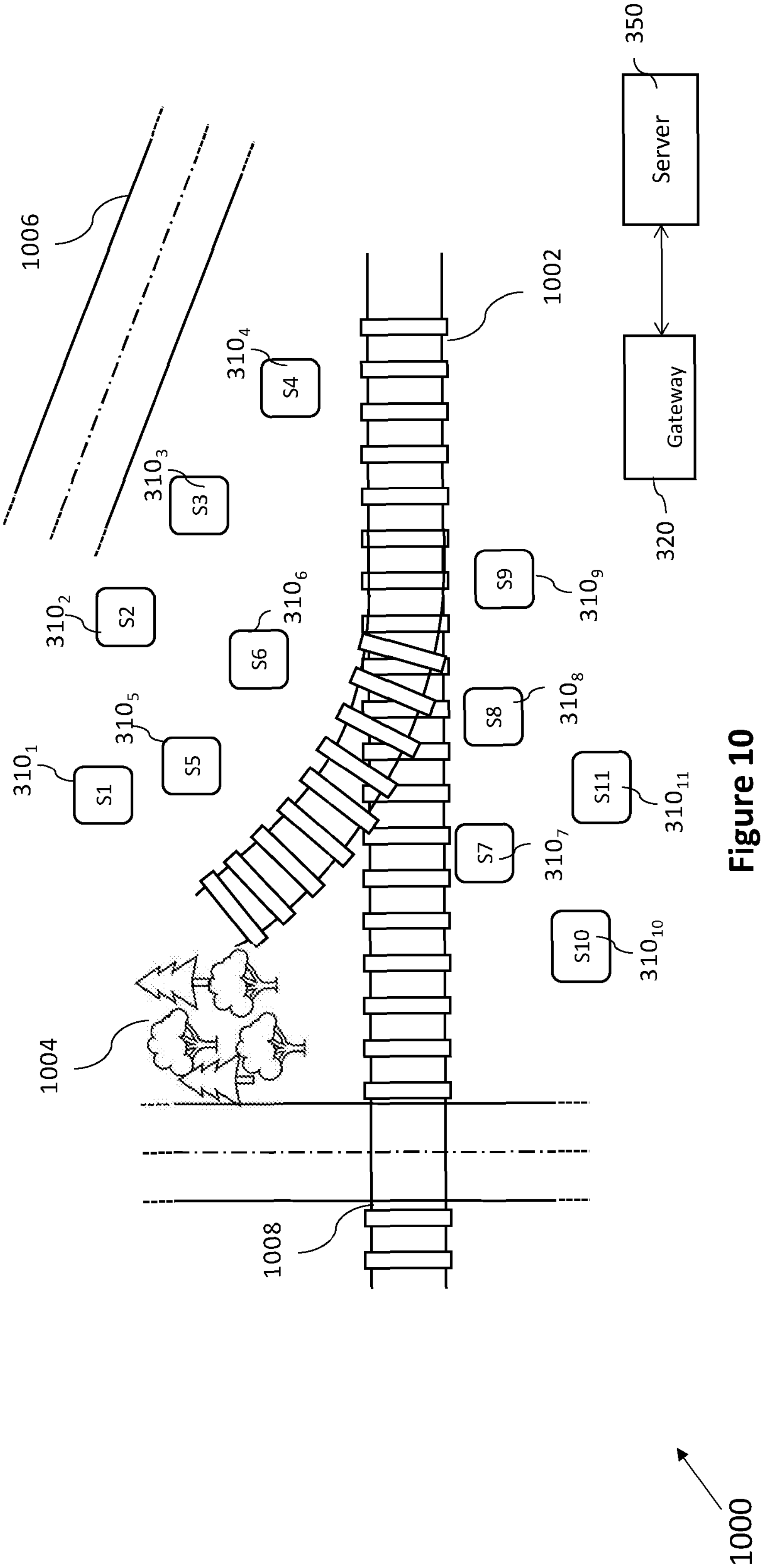

1006
1002
1004
1008
S1
S2
S3
S4
S5
S6
S7
S8
S9
S10
S11
$310_1$
$310_2$
$310_3$
$310_4$
$310_5$
$310_6$
$310_7$
$310_8$
$310_9$
$310_{10}$
$310_{11}$
Server
350
Gateway
320
1000


Figure 10

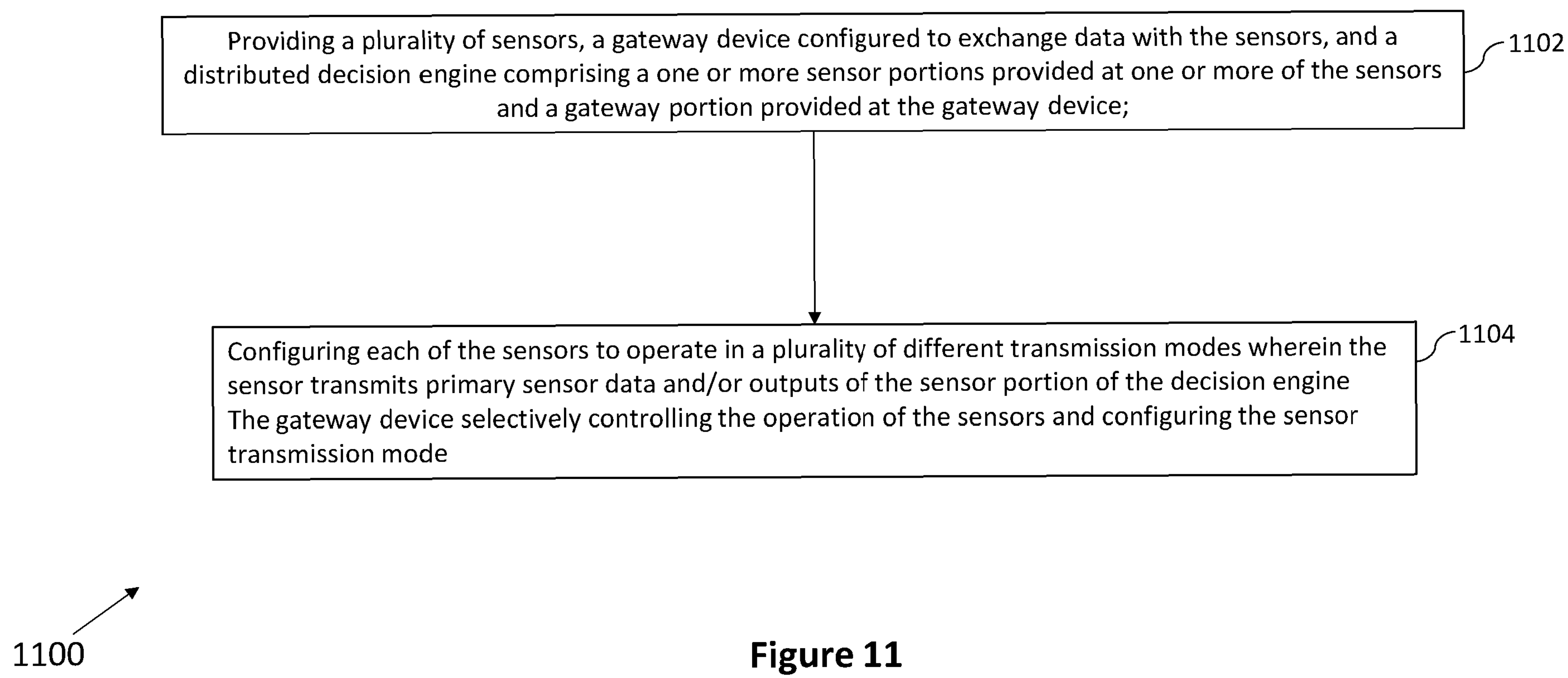
Providing a plurality of sensors, a gateway device configured to exchange data with the sensors, and a distributed decision engine comprising a one or more sensor portions provided at one or more of the sensors and a gateway portion provided at the gateway device;
1102
Configuring each of the sensors to operate in a plurality of different transmission modes wherein the sensor transmits primary sensor data and/or outputs of the sensor portion of the decision engine The gateway device selectively controlling the operation of the sensors and configuring the sensor transmission mode
1104
1100

**Figure 11**

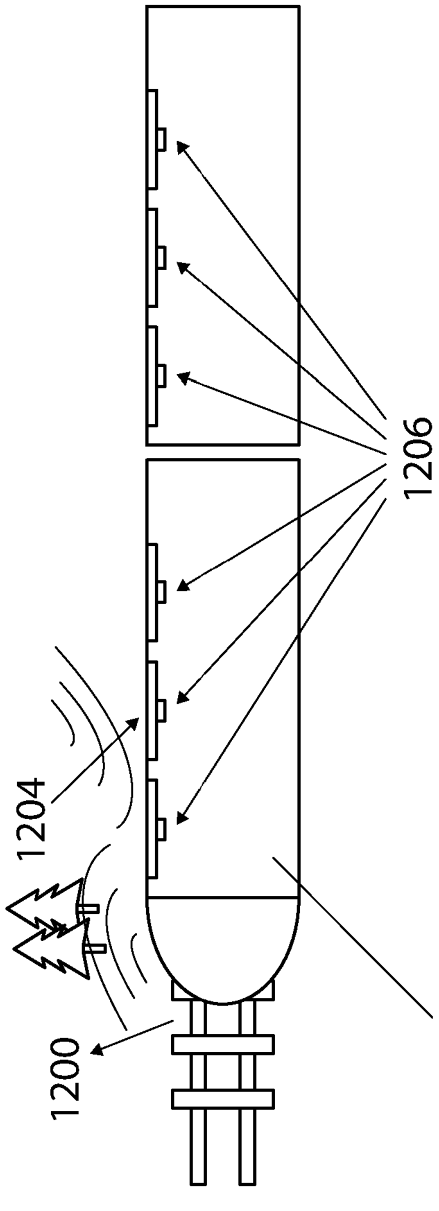


Figure 12

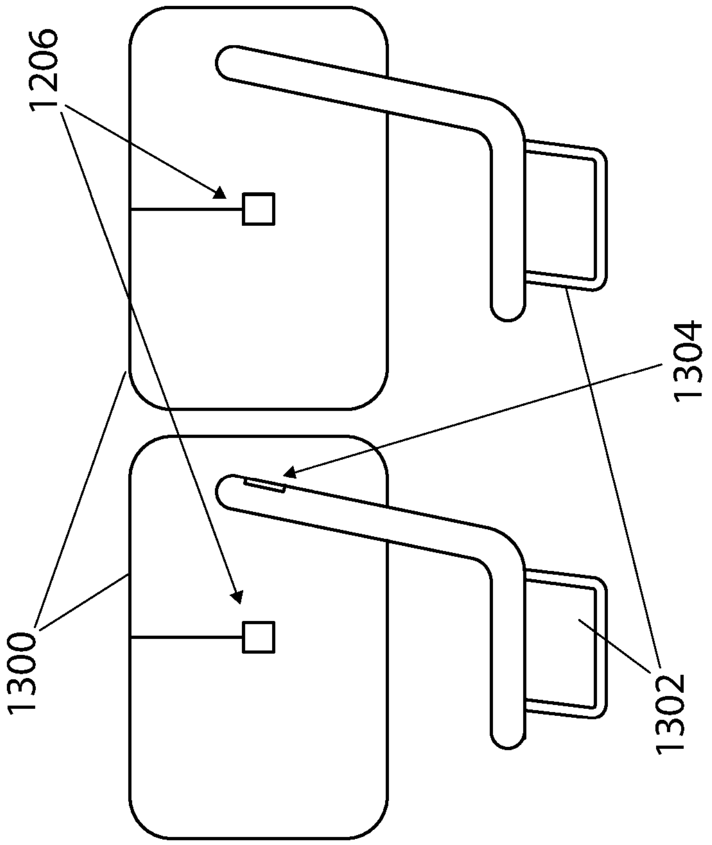


Figure 13

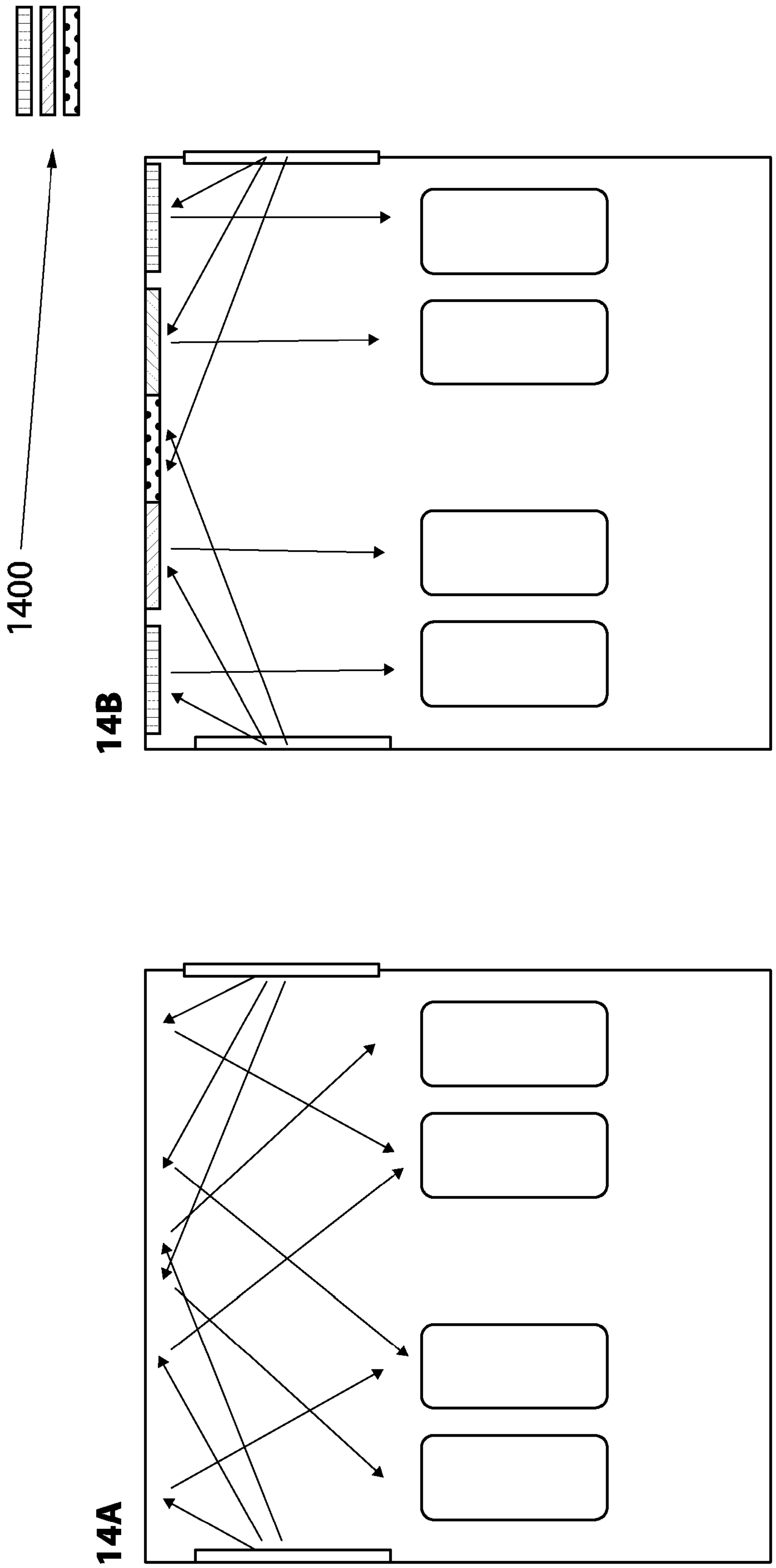


Figure 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2020293790 A1